# FASCICULE DE BREVET EUROPEEN

(11) **EP 2 887 704 B1**
(45) Date de publication et mention de la délivrance du brevet: **05.08.2020**
(21) Numéro de dépôt: 14198095.3
(22) Date de dépôt: 16.12.2014
(51) Int. Cl.: H04W 4/02, H04W 4/021, H04L 29/08

(54) **Procédé d'interaction entre un premier objet numérique et au moins un deuxième objet numérique et système d'interaction**
Verfahren zur Interaktion zwischen einem ersten digitalen Objekt und mindestens einem zweiten digitalen Objekt, und Interaktionssystem
Method for interaction between a first digital object and at least one second digital object and interaction system

(30) Priorité: 23.12.2013 FR 1363498
(43) Date de publication de la demande: 24.06.2015
(73) Titulaire: ORANGE, 75015 Paris (FR)
(72) Inventeur: Giraudon, Vincent, 06600 Antibes (FR); Romano, Philippe, 06800 Cagnes Sur Mer (FR); Grohan, Patrick, 06140 Vence (FR); Bruno, Adrien, 06130 Grasse (FR)
(74) Mandataire: Vidon Brevets & Stratégie

(56) Documents cités:
- WO-A1-00/17737
- FR-A1- 2 971 657
- FR-A1- 2 985 584
- US-A1- 2005 225 453
- US-A1- 2012 019 674
- US-A1- 2013 085 509

## Description

### 1. DOMAINE DE L'INVENTION

Le domaine de l'invention est celui des interactions entre objets ou dispositifs, pouvant être présents dans des périmètres géographiques distants.

Par exemple, ces dispositifs sont représentés par des objets numériques, référencés dans au moins une base de données référençant une pluralité d'objets numériques. Chaque objet numérique est représentatif d'au moins un objet réel (machine/dispositif) ou virtuel localisé dans un périmètre géographique.

Lorsque des dispositifs sont présents dans des périmètres géographiques distants, les objets numériques qui les représentent sont par exemple gérés dans des systèmes d'information géographique (SIG), associés chacun à un périmètre géographique et comprenant un équipement (aussi appelé équipement central) accédant à une base de données référençant la pluralité d'objets numériques situés dans le périmètre géographique donné.

Plus précisément, l'invention concerne une technique d'interaction entre un premier objet numérique et au moins un deuxième objet numérique.

### 2. ARRIÈRE-PLAN TECHNOLOGIQUE

Il existe des techniques permettant de pointer (c'est-à-dire diriger vers) un dispositif de pointage vers un dispositif cible (dispositif pointé), selon lesquelles le dispositif de pointage et le dispositif pointé doivent être prévus pour fonctionner ensemble (l'un comprend un émetteur et l'autre un récepteur apte à détecter un signal émis par l'émetteur). Par exemple, un téléviseur comprend typiquement un récepteur infrarouge capable de recevoir des signaux infrarouges émis par un boîtier de télécommande fourni avec ce téléviseur.

L'inconvénient majeur de ces techniques antérieures est qu'il est nécessaire d'établir un canal de communication direct et permanent entre le dispositif de pointage et le dispositif pointé (grâce au couple émetteur/récepteur), ce qui a conduit à la réalisation de matériels spécifiques à chaque fabriquant, peu évolutifs et entraînant leurs multiplicités.

La technique proposée dans la demande de brevet français déposée le 29 mars 2012, sous le numéro FR1252873, consiste à utiliser un équipement central pour déterminer quel(s) dispositif(s) est(sont) pointé(s) par le dispositif de pointage. Cette technique offre ainsi plusieurs avantages par rapport aux techniques antérieures précitées. En effet, c'est l'équipement central qui obtient une information de pointage tridimensionnel, c'est-à-dire une information indiquant vers quel(s) dispositif(s) pointé(s) est orienté physiquement le dispositif de pointage, dans un espace à trois dimensions. Il n'est donc pas nécessaire que le dispositif de pointage et le ou les dispositifs pointés soient conçus pour fonctionner ensemble (pas de nécessité que l'un comprenne un émetteur et l'autre un récepteur adapté à cet émetteur). Pour l'équipement central, la connaissance de l'information de pointage tridimensionnel permet de créer une association entre le dispositif de pointage et le ou les dispositifs pointés. Il est possible de créer des applications découlant de cette association (notamment, mais non exclusivement, pour commander le dispositif pointé par le dispositif de pointage).

Cependant, la technique de la demande FR1252873 peut encore être améliorée, notamment en utilisant un dispositif de pointage qui n'est pas présent dans le périmètre géographique du dispositif pointé, afin de faciliter les usages et les interactions, pour l'utilisateur.

### 3. EXPOSÉ DE L'INVENTION

Selon un objet de l'invention, il est proposé un procédé d'interaction entre un premier objet numérique et au moins un deuxième objet numérique, lesdits premier et deuxième objets numériques étant représentatifs respectivement d'un premier et deuxième dispositif, ce procédé comprenant les étapes suivantes :
- obtention, pour chacun des premier et deuxième objets numériques, d'au moins une information, dite propriété fonctionnelle, représentative d'au moins une fonction du dispositif représenté par l'objet numérique concerné ;
- mémorisation d'une association entre au moins une fonction du premier dispositif, dite première fonction, et au moins une fonction du deuxième dispositif, dite deuxième fonction, l'association étant définie à partir des propriétés fonctionnelles obtenues;
- établissement d'une liaison de communication via au moins un réseau entre un premier équipement communicant apte à piloter le premier dispositif et un deuxième équipement communicant apte à piloter le deuxième dispositif,
- en cas de déclenchement d'une exécution par le premier dispositif d'une première fonction et lorsqu'une association est mémorisée entre ladite première fonction et une dite deuxième fonction d'un deuxième dispositif, envoi d'une notification du premier équipement communicant vers le deuxième équipement communicant au travers de ladite liaison de communication afin de déclencher l'exécution de ladite deuxième fonction par ledit deuxième dispositif.

Ainsi, le principe général de l'invention repose sur une interaction définie entre deux objets numériques, au travers de fonctions propres aux dispositifs associés respectivement à ces deux objets numériques, permettant d'associer le déclenchement d'une première fonction d'un dispositif au déclenchement d'une deuxième fonction d'un autre dispositif, préalablement associée à la première fonction.

En pratique, chacun des premier et deuxième objets numériques, représentatifs respectivement d'un premier et deuxième dispositif, est référencé dans au moins une base de données d'objets numériques; et l'obtention pour chacun des premier et deuxième objets numériques, d'au moins une information, dite propriété fonctionnelle, représentative d'au moins une fonction du dispositif représenté par l'objet numérique concerné, est mise en œuvre par interrogation d'au moins une dite base de données.

Cette association de fonctions est mise en œuvre à partir des données permettant de référencer les objets numériques dans des bases de données, et en particulier sur les propriétés fonctionnelles et les fonctions associées. En effet, un objet numérique est notamment défini par une ou plusieurs propriétés fonctionnelles, correspondant à une ou plusieurs fonctions de cet objet numérique.

Dans ce document, on parlera indifféremment de la fonction d'un objet numérique ou de la fonction du dispositif représenté par cet objet numérique : il s'agit d'une même fonction représentée par des propriétés fonctionnelles mémorisées dans une base de données référençant l'objet numérique.

Il est à noter qu'une fonction d'un objet numérique correspond soit à une fonction d'un objet réel (terminal, téléviseur, lampe, caméra, etc.) intégrant ou correspondant au dispositif représenté par cet objet numérique, soit à une fonction logicielle mise en œuvre par le dispositif représenté par cet objet numérique.

Une fonction d'un dispositif est ainsi une fonction mise en œuvre par un objet concret, au moins une fonction de ce dispositif pouvant être déclenchée au moyen d'un signal de commande par un équipement communicant associé. Dans la suite de la description, on parlera indifféremment de fonctions d'un dispositif ou de fonctions d'un objet.

Le premier (respectivement deuxième) dispositif est pilotable à partir d'un premier (respectivement deuxième) équipement communicant, intégrant ce dispositif ou communiquant avec lui afin de pouvoir piloter ce premier (respectivement deuxième) dispositif par envoi d'une commande : les premier et deuxième équipements communicants sont en outre capables d'émettre et/ou recevoir des notifications concernant l'exécution d'une fonction par le premier (respectivement deuxième) dispositif afin de requérir / déclencher l'exécution d'une fonction associée par le deuxième (respectivement premier) dispositif.

Un équipement communicant est par exemple un terminal mobile intégrant le dispositif (logiciel) à commander ou bien une passerelle d'un réseau local (LAN, Local area network), apte à envoyer des commandes vers des dispositifs connectés à ce réseau local, ou bien encore un boîtier de commande d'équipements domestiques (radiateurs, volets, lampe électrique, etc.). L'équipement communicant peut être fixe ou bien mobile, notamment s'il intègre le dispositif à commander ou si le lien de commande avec le dispositif à commander peut être maintenu en situation de mobilité.

En particulier, les premier et deuxième équipements communicants communiquent entre eux au travers d'au moins un réseau, par exemple un réseau radio local (Wifi, Bluetooth, etc.), un réseau cellulaire, un réseau IP, le réseau Internet ou une simple liaison radio, pour la transmission de notification de déclenchement de fonctions associées.

Au travers des équipements communicants, le lien fonctionnel défini au travers des fonctions associées peut ainsi perdurer dans le temps, éventuellement indépendamment de la localisation de l'équipement communicant.

Ainsi, un dispositif doté de fonctions à associer est par exemple un composant logiciel (éventuellement une application logicielle complète) ou un dispositif télécommandable, par exemple un radiateur, une lampe, une porte de garage, etc. Ce dispositif est associé à un équipement communicant (par exemple de type téléphone intelligent (« smartphone ») ou passerelle domestique ou autre équipement de commande) qui commande l'exécution de fonctions de ce dispositif. L'équipement communicant associé à un composant logiciel peut être l'application logicielle qui intègre le composant logiciel ou le terminal mobile qui met en œuvre ce composant logiciel. L'équipement communicant associé à un dispositif télécommandable peut être une passerelle domestique, une set-top-box, un logiciel ou un boîtier de commande qui envoie des commandes vers ce dispositif télécommandable.

L'association entre deux fonctions de deux objets numériques permet d'associer le déclenchement réel des deux fonctions correspondantes des dispositifs correspondant aux deux objets numériques.

Ainsi, ce mode de réalisation particulier de l'invention consiste à obtenir les propriétés fonctionnelles des objets numériques représentatifs des dispositifs, puis à associer un objet numérique à un autre objet numérique via ces propriétés fonctionnelles, de façon à associer les fonctions des deux objets numériques et donc les fonctions correspondantes des deux dispositifs.

Une propriété fonctionnelle peut être définie de manière codée selon un référentiel des fonctions (ou sous-fonctions) d'un objet réel ou virtuel, le référentiel servant à définir de manière codifiée toutes les propriétés fonctionnelles possibles relatives aux fonctions d'un objet et permettant ainsi de définir des règles d'association entre fonctions relativement aux propriétés fonctionnelles utilisables. Le référentiel est par exemple constitué par une liste de fonctions possibles telle que: acquisition d'image, affichage d'image, réception d'image, transmission d'image, acquisition audio, restitution audio, réception audio, transmission audio, déplacement ou mouvement d'une partie du dispositif ou du dispositif lui-même, mesure de déplacement ou de mouvement, changement d'état, allumer, éteindre, mesurer une température, régler une température, etc.

Par exemple, un téléviseur présente les fonctions d'un récepteur d'images et d'un afficheur de ces images. Les propriétés fonctionnelles relatives à ces fonctions sont la réception d'images et l'affichage d'images.

Une caméra « PTZ » présente la fonction de capture d'images dans n'importe quelle direction de visée, grâce aux mouvements de la caméra sur deux axes. Les propriétés fonctionnelles possibles relatives à ces fonctions d'une caméra PTZ sont la capture d'image et le déplacement de l'axe de visée selon un angle de rotation.

Ainsi, on peut associer un smartphone avec une caméra (qu'ils soient localisés ou non dans le même périmètre géographique) en associant leurs fonctions respectives que sont le mouvement (une des fonctions du smartphone étant de mesurer sa position relativement à un repère fixe dans l'espace et par exemple de fournir deux angles par rapport à une orientation de base, et une des fonctions de la caméra étant de recevoir des paramètres angulaires et de s'orienter dans cette même direction) et le traitement des images (d'autres fonctions du smartphone étant de recevoir des images et de les projeter sur son écran, et une autre fonction de la caméra étant de capturer des images). Ainsi, les deux objets, par la complémentarité de leurs fonctions, peuvent être associés.

On obtient ensuite, lorsqu'un mouvement du smartphone est détecté, le déclenchement d'un mouvement équivalent de la caméra, et lorsque des images sont capturées par la caméra, le déclenchement de leur projection sur l'écran du smartphone.

Le résultat de cette association entre deux objets numériques, via leurs fonctions respectives, peut être noté « intrication » dans la suite du document, deux objets numériques ainsi associés étant « intriqués ». Il en va de même pour les dispositifs représentés par ces objets numériques, ou encore pour les objets concrets intégrant ces dispositifs, qui seront dits être « intriqués ».

Une fois l'association mémorisée entre deux fonctions de deux dispositifs, le déclenchement de la première fonction sur le premier dispositif va déclencher l'exécution de la deuxième fonction sur le deuxième dispositif, et ce du moment que les équipements communicants associés sont en mesure d'établir une liaison de communication pour qu'une notification soit transmise de l'un vers l'autre.

Peu importe si la localisation des dispositifs a changé. Par exemple, si la fonction de capture d'image d'un premier dispositif dans un premier équipement communicant constitué par un premier terminal, est associée à la fonction d'affichage d'image d'un deuxième dispositif dans un deuxième équipement communicant constitué par un deuxième terminal, alors le déclenchement de l'une entraînera le déclenchement de l'autre dès lors qu'une liaison peut être établie, directement ou par un équipement intermédiaire, entre les deux équipements communicants.

Dans un mode de réalisation, des données (par exemple, une image) résultant de l'exécution de la première fonction (par exemple, capture d'image) seront transmises d'un équipement communicant à l'autre en vue d'un traitement par la deuxième fonction (par exemple, affichage de l'image transmise), au travers de la liaison de communication établie pour la notification ou au travers d'une autre liaison de communication.

De plus, la notification ou commande qui sert à déclencher l'exécution d'une fonction comprend par exemple un identifiant de la fonction à déclencher et/ou un identifiant de la fonction déclenchée.

Selon une caractéristique particulière de l'invention, l'association est déterminée par application d'au moins une règle d'association aux propriétés fonctionnelles respectives obtenues pour chacun desdits premier et deuxième objets numériques. Les associations entre fonctions de dispositifs peuvent alors être déterminées automatiquement sur la base de ces règles d'association, sans intervention nécessaire d'un utilisateur.

Selon un aspect particulier de l'invention, le procédé comprend les étapes suivantes :
- présentation des propriétés fonctionnelles obtenues à un utilisateur du premier ou du deuxième dispositif,
- mise à disposition de l'utilisateur de moyens de sélection de propriétés fonctionnelles représentatives de fonctions à associer, et
- obtention de données d'association représentatives d'une association à mémoriser entre des fonctions représentées par des propriétés fonctionnelles sélectionnées par l'utilisateur.

Ainsi, un utilisateur peut interagir avec le système d'interaction d'objets en sélectionnant des fonctions qu'il souhaiterait voir associées, ou en interdisant des associations de fonctions. Il peut en outre modifier des associations qui auraient été définies automatiquement sur la base de règles d'association.

Selon un mode de réalisation particulier de l'invention, le procédé comprend les étapes suivantes :
- détection de la présence du deuxième équipement communicant dans une zone de détection autour du premier équipement communicant ;
- obtention par le premier équipement communicant d'au moins une propriété fonctionnelle du deuxième dispositif;
- envoi par le premier équipement communicant d'une requête de mémorisation d'association vers le deuxième équipement communicant afin de déclencher ladite étape de mémorisation,
l'envoi de ladite notification étant effectué lorsque le deuxième équipement communicant est sorti de ladite zone de détection.

Ainsi, une intrication est initiée entre deux dispositifs, lorsque le deuxième équipement communicant apte à piloter le deuxième dispositif se trouve à proximité du premier équipement communicant apte à piloter le premier dispositif, le déclenchement d'une fonction associée pouvant avoir lieu lorsque le deuxième équipement communicant ne se trouve plus à proximité du premier équipement communicant dès lors que l'association est mémorisée.

Selon un aspect particulier de l'invention, le procédé comprend les étapes suivantes :
- obtention, pour un troisième objet numérique représentatif d'un troisième dispositif, d'au moins une information, dite propriété fonctionnelle, représentative d'au moins une fonction du troisième dispositif;
- mémorisation d'une association entre ladite première fonction du premier dispositif, et au moins une fonction dudit troisième dispositif, dite troisième fonction;
- en cas de détection d'une association mémorisée, d'une part, entre ladite troisième fonction et ladite première fonction, et, d'autre part, entre ladite deuxième fonction et ladite première fonction, mémorisation d'une association entre ladite troisième fonction du troisième dispositif et ladite deuxième fonction du deuxième dispositif;
- en cas de déclenchement d'une exécution par ledit premier dispositif de ladite première fonction et lorsqu'une association est mémorisée entre ladite première fonction et ladite troisième fonction, déclenchement d'une exécution par le troisième dispositif de ladite troisième fonction,
- en cas de déclenchement d'une exécution par ledit deuxième dispositif de ladite deuxième fonction et lorsqu'une association est mémorisée entre ladite deuxième fonction et ladite troisième fonction, déclenchement d'une exécution par le troisième dispositif de ladite troisième fonction.

Selon cette caractéristique de l'invention, les associations créées bénéficient d'un effet transitif. Par exemple, si deux fonctions F1 et F2 sont associées et deux fonctions F2 et F3 sont également associées, alors les fonctions F1 et F3 le sont également. Ceci permet de générer automatiquement et donc facilement des associations entre fonctions.

Selon une autre caractéristique particulière, lorsque le premier objet numérique est représentatif d'au moins un objet réel ou virtuel localisé dans un périmètre géographique, dit périmètre géographique local, et une position géographique d'au moins un objet réel ou virtuel, représenté par un objet numérique et localisé dans un périmètre géographique distant du périmètre géographique local, est mémorisée dans une base de données dite distante référençant des objets numériques, et lorsqu'un équipement distant accédant à la base de données distante étant adapté pour déterminer, en fonction de positions géographiques mémorisées pour des objets dans le périmètre géographique distant et d'informations de pointage sur la position géographique et l'orientation d'un dispositif de pointage utilisé dans le périmètre géographique local, si la position d'un des objets numériques est pointée par le dispositif de pointage donné, le procédé comprend les étapes suivantes :
- établissement d'un canal de communication entre un équipement communicant, dit distant, accédant à la base de données distante et un équipement communicant, dit local, localisé dans le périmètre géographique local, apte à obtenir les informations de pointage du dispositif de pointage local ;
- réception, par l'équipement communicant distant, via le canal de communication, des informations de pointage;
- identification, par l'équipement communicant distant, en fonction d'une part des informations de pointage reçues et d'autre part d'une position virtuelle de départ et d'une orientation virtuelle de départ attribuées au dispositif de pointage local dans le périmètre géographique distant, d'un objet numérique du périmètre géographique distant dont la position géographique est pointée virtuellement par le dispositif de pointage local,
- l'étape de mémorisation d'une association étant déclenchée pour l'objet numérique identifié.

Ce mode de réalisation permet l'identification de dispositif dont les fonctions sont à associer par une méthode de pointage des objets réels ou virtuels représentés par les objets numériques. Ce mode d'interaction est particulièrement simple et intuitif pour l'utilisateur qui, repérant les objets de son environnement, peut les pointer et déterminer ensuite les fonctions à associer.

En particulier, le procédé comprend les étapes suivantes :
- mise à jour d'une base de données d'associations référençant les objets numériques définis au moins par leurs propriétés fonctionnelles obtenues ;
- transmission, aux premier et deuxième équipements communicants, d'au moins une information représentative de l'association des première et deuxième fonctions.

Selon ce mode de réalisation particulier de l'invention, une fois les propriétés fonctionnelles obtenues pour les premier et deuxième objets numériques (par ailleurs déjà référencés dans une ou plusieurs bases de données), une base de données (pouvant être distincte de celle(s) référençant ces objets), est utilisée pour mémoriser les associations des fonctions des différents objets numériques.

De plus, selon ce mode de réalisation particulier de l'invention, les équipements communicants, dont les dispositifs sont « associés » via une association de leurs fonctions respectives, sont informés de cette association, par exemple afin que l'utilisateur d'un dispositif intriqué avec un autre dispositif ait connaissance de cette intrication et puisse en bénéficier.

Concernant les règles d'associations, plusieurs modes de réalisation sont possibles.

En particulier, selon une règle d'association, l'étape de mémorisation d'une association entre la première fonction et la deuxième fonction est mise en œuvre lorsqu'une donnée de sortie de la première fonction est utilisable comme donnée d'entrée de la deuxième fonction, et l'exécution de la deuxième fonction du deuxième dispositif étant déclenchée pour traiter au moins une donnée traitée pendant l'exécution de la première fonction.

L'association établie entre une première fonction et une deuxième fonction peut par exemple résulter du fait que les deux fonctions sont des fonctions de traitement d'un même type de données (de même format ou non) et peuvent ainsi se compléter l'une l'autre, c'est-à-dire être utilisées successivement sur un même type de contenu.

Selon un premier exemple, la première fonction est une fonction de capture d'image et la deuxième fonction est une fonction d'affichage d'image. Ainsi, la fonction d'affichage d'une image au moyen d'un deuxième dispositif sera déclenchée après exécution d'une fonction de capture d'image au moyen d'un premier dispositif.

Selon un autre exemple, la fonction de visualisation d'un contenu multimédia au moyen d'un deuxième dispositif sera déclenchée après exécution d'une fonction de captation au moyen d'un premier dispositif aboutissant à la génération de ce contenu multimédia.

En généralisant, lorsqu'une donnée de sortie de la première fonction est utilisable comme donnée d'entrée d'une deuxième fonction, la première et la deuxième fonction peuvent être associées.

Les types de données pouvant être traitées sont par exemple un contenu vidéo, un contenu audio, du texte, une image, une position géographique, un angle, une mesure de déplacement ou autre grandeur physique mesurable, un nom de personne, une adresse électronique, une adresse IP, une adresse URL, etc.

Ces données ne sont pas forcément dans le même format, qui peut être par exemple un format analogique ou numérique, comme un format de codage des données du contenu (TIFF, JPEG...), un format de codage de l'angle, de la position géographique, un format d'adresse, etc...

Par exemple, une propriété fonctionnelle appartient au groupe comprenant :
- la réception d'image ;
- l'enregistrement d'image ;
- l'émission d'image ;
- la réception de son ;
- l'enregistrement de son ;
- l'émission de son ;
- le mouvement...

Selon une caractéristique particulière de l'invention, l'étape d'association tient également compte d'au moins une information représentative d'un contexte d'utilisation des dispositifs.

Ainsi, selon ce mode de réalisation particulier de l'invention, l'association se base également sur une ou plusieurs informations dites de contexte, permettant de prendre en considération tous les éléments entourant l'utilisateur ou les objets considérés et permettant par exemple d'appliquer un « filtre » réduisant le nombre d'associations proposées ou déterminées automatiquement.

Par exemple, ces informations de contexte permettent de prendre en considération l'utilisation souhaitée des deux objets numériques ultérieurement associés via certaines de leurs fonctions, ou encore de prendre en considération des exigences formulées préalablement par un utilisateur particulier de l'un ou l'autre des objets réels ou virtuels ultérieurement associés.

Par exemple, ces informations de contexte permettent de filtrer certaines possibilités d'association en ne proposant pas d'associations avec des objets numériques représentatifs de caméras à un utilisateur qui ne souhaite pas utiliser d'outil de vision.

Selon un autre exemple, une information de contexte permet de tenir compte de restrictions préalablement exprimées de manière à ce que certaine(s) fonction(s) d'un objet donné ne soi(en)t pas associée(s) avec certaine(s) fonction(s) d'un autre objet donné (dans ce cas, l'association entre deux objets peut être considérée comme « partielle », c'est-à-dire que, selon le contexte d'utilisation d'un objet, une fonction d'un objet est associée ou non à une fonction d'un autre objet).

Par exemple, un contexte d'utilisation est défini par au moins un élément du groupe comprenant :
- un utilisateur d'un des objets numériques ;
- un périmètre géographique d'un des objets numériques ;
- un des objets numériques...

Selon une autre règle d'association, lorsqu'une première fonction, dite de changement d'état, du premier dispositif, provoque un changement d'état du premier dispositif vers un état identique à celui dans lequel le deuxième dispositif se trouve suite à une exécution d'une deuxième fonction, dite de changement d'état, du deuxième dispositif, l'étape de mémorisation d'une association est mise en œuvre entre la première fonction de changement d'état du premier dispositif et la deuxième fonction de changement d'état du deuxième dispositif de sorte que, en cas de déclenchement d'une exécution par ledit premier dispositif de la première fonction de changement d'état, la deuxième fonction de changement d'état est déclenchée et le deuxième dispositif se retrouve dans le même état que le premier dispositif.

Ainsi, selon ce mode de réalisation particulier de l'invention, lorsque deux objets numériques sont associés, leurs états courants sont liés, de sorte qu'un changement de l'état de l'un des objets, par exemple suite au déclenchement d'une de ses fonctions, entraîne automatiquement le changement équivalent de l'état de l'autre objet, par exemple suite au déclenchement d'une de ses fonctions associées à celle de l'autre objet.

Une telle association automatique entre deux objets numériques peut être appelée « intrication forte », les deux objets numériques se comportant exactement de la même façon.

En général, cette intrication forte peut être mise en œuvre pour deux objets présentant les mêmes fonctions, par exemple deux interrupteurs présentant les fonctions d'allumage ou d'extinction de la lumière dans deux pièces distantes, ou deux appareils de visioconférence présents dans deux pièces distantes et présentant les mêmes fonctions. Ainsi, une action d'un utilisateur sur l'un des objets, entrainant le déclenchement de l'exécution de l'une des fonctions de l'un des objets, déclenche systématiquement l'exécution de la même fonction sur l'autre objet, et induit donc le même résultat (lumière allumée dans la pièce distante lorsque l'utilisateur appuie sur l'interrupteur de la pièce où il se trouve, démarrage de l'appareil de visioconférence dans la pièce distante lorsque l'utilisateur allume l'appareil dans la pièce où il se trouve ...).

Selon un mode de réalisation particulier, le premier objet numérique est représentatif d'au moins un premier objet réel ou virtuel localisé dans un premier périmètre géographique et le deuxième objet numérique est représentatif d'au moins un deuxième objet réel ou virtuel localisé dans un deuxième périmètre géographique, distant du premier périmètre géographique, et les premier et deuxième objets numériques sont référencés respectivement dans une base de données d'objets numériques locale et une base de données d'objets numériques distante et en ce que l'étape d'obtention est mise en œuvre par interrogation desdites bases de données d'objets numériques locale et distante.

Par exemple, selon ce mode de réalisation particulier, un Système d'Information Géographique, noté SIG, peut être préalablement créé, respectivement pour le périmètre géographique local et le périmètre géographique distant, tel que décrit par exemple dans la demande de brevet FR1262595. Un tel SIG comprend un équipement central accédant à une base de données référençant une pluralité d'objets numériques.

Selon un autre exemple, il n'est pas nécessaire de créer un SIG car ce sont des objets réels (par exemple des terminaux mobiles), dans les périmètres géographiques local et distant, qui gèrent les représentations numériques des autres objets réels ou virtuels localisés dans leur périmètre géographique. Dans ce cas, une plateforme spécifique peut centraliser les propriétés fonctionnelles des différents objets numériques et mettre en œuvre l'association des fonctions liées à ces propriétés fonctionnelles, ou bien l'obtention des propriétés fonctionnelles ainsi que l'association des fonctions y relatives peuvent être mises en œuvre directement par les objets réels gérant les représentations numériques des autres objets réels ou virtuels localisés dans leur périmètre géographique.

Selon une caractéristique particulière de l'invention, le procédé est mis en œuvre par au moins un module de gestion d'associations ayant accès à au moins la base de données d'objets numériques.

Selon ce mode de réalisation particulier de l'invention, une entité spécifique, notée module de gestion d'associations, permet de mettre en œuvre les différentes étapes du procédé en ayant notamment accès à la base de données d'objets numériques.

Ce module de gestion d'association peut être mis en œuvre dans un équipement communicant qui gère un ou plusieurs dispositifs dont les fonctions sont à associer : dans ce cas, ce module de gestion d'association sert à gérer les associations entre les fonctions des dispositifs gérés par cet équipement et communique avec au moins un autre module de gestion d'association d'un autre équipement.

Ce module de gestion d'association peut aussi être mis en œuvre dans un équipement communicant central qui gère les associations entre les fonctions de plusieurs dispositifs gérés par plusieurs équipements communicants : dans ce cas, ce module de gestion d'association sert à gérer les associations entre les fonctions des dispositifs gérés par ces différents équipements.

De cette manière, ce module de gestion d'associations peut récupérer les propriétés fonctionnelles relatives à chaque objet numérique référencé dans la base de données, et ensuite mettre en œuvre les différentes étapes nécessaires au déclenchement de l'exécution d'une fonction d'un deuxième objet suite au déclenchement d'une fonction sur un premier objet associé.

Par exemple, le module de gestion des associations reçoit d'abord via un premier équipement communicant une indication d'une exécution d'une fonction par un premier dispositif puis émet, à destination du deuxième dispositif, via un deuxième équipement communicant, une commande/notification pour l'exécution de la fonction associée.

Selon une première variante de ce mode de réalisation, le module de gestion d'associations correspond à une entité physique spécifique, distincte des dispositifs et de l'entité gérant la base de données d'objets numériques.

Selon une deuxième variante, le module de gestion d'associations est intégré par exemple dans l'entité gérant la base de données d'objets numériques ou bien dans un des dispositifs représentés par un des objets numériques.

Par exemple, le module de gestion d'associations communique d'une part avec un équipement communicant central local ayant accès à la base de données d'objets numériques locale et d'autre part avec un équipement communicant central distant ayant accès à la base de données d'objets numériques distante.

Selon ce mode de réalisation particulier de l'invention, celle-ci est principalement mise en œuvre par un module de gestion d'associations communiquant avec les équipements centraux des deux SIG des périmètres géographiques local et distant, ces équipements centraux ayant accès respectivement à la base de données locale et la base de données distante, pour gérer les objets numériques référencés dans ces bases de données.

Ainsi, chaque équipement central, local et distant, obtient les propriétés fonctionnelles relatives à chaque objet numérique référencé respectivement dans les bases de données locale et distante, et les transmet au module de gestion d'associations. De cette manière, le module de gestion d'associations met en œuvre l'association d'au moins un objet numérique local avec un objet numérique distant, en fonction de leurs propriétés fonctionnelles, en fusionnant les données reçues des deux équipements centraux (local et distant).

Selon un autre exemple, le module de gestion d'associations communique d'une part avec un équipement communicant local ayant accès à la base de données d'objets numériques locale ou un équipement communicant distant ayant accès à la base de données d'objets numériques distante et d'autre part avec l'un des dispositifs.

Selon ce mode de réalisation particulier de l'invention, celle-ci est principalement mise en œuvre par un module de gestion d'associations communiquant d'une part avec un équipement central d'un SIG du périmètre géographique local ou distant, cet équipement central ayant accès à la base de données locale ou la base de données distante pour gérer les objets numériques référencés dans cette base de données, et d'autre part avec un objet situé dans l'autre périmètre géographique, par exemple un objet réel tel qu'un smartphone.

Ainsi, dans ce cas, le smartphone représente l'élément matériel de la localisation du périmètre géographique dans lequel il est situé, et a la capacité de gérer des objets numériques représentatifs d'objets réels ou virtuels situés dans le même périmètre géographique et donc d'en connaître/obtenir les propriétés fonctionnelles, afin de les transmettre au module de gestion d'associations.

Selon encore un autre exemple, les premier et deuxième dispositifs étant intégrés respectivement dans un premier et deuxième équipement communicant aptes à communiquer entre eux, le procédé est mis en œuvre par le premier ou deuxième équipement.

Par exemple, ces deux objets sont des smartphones, qui gèrent des objets numériques représentatifs d'objets réels ou virtuels situés dans leur périmètre géographique et peuvent donc en connaître/obtenir les propriétés fonctionnelles.

Selon une première variante de ce mode de réalisation particulier de l'invention, le smartphone local communique les propriétés fonctionnelles relatives aux objets réels ou virtuels situés dans son périmètre géographique, à un équipement distinct, noté plateforme spécifique, ainsi que le numéro du smartphone distant avec lequel il souhaite partager des objets numériques. De son côté, le smartphone distant effectue les mêmes étapes et la plateforme spécifique peut mettre en œuvre ensuite l'association automatique d'un objet numérique local et d'un objet numérique distant, en fonction des propriétés fonctionnelles fournies par chaque smartphone. La plateforme spécifique communique le résultat de la ou des associations mises en œuvre à chaque smartphone.

Selon une deuxième variante, les deux smartphones, local et distant, communiquent directement entre eux pour s'échanger les propriétés fonctionnelles des objets réels ou virtuels situés dans leur périmètre géographique et pour mettre en œuvre les associations d'objets numériques local et distant.

Selon une autre caractéristique particulière de l'invention, les sous-étapes de réception et d'émission sont mises en œuvre via au moins un canal de communication permettant de communiquer avec les premier et deuxième objets réels ou virtuels représentés par les premier et deuxième objets numériques.

Ainsi, il existe un canal de communication entre les objets intriqués mais ce canal n'est pas obligatoirement direct entre les deux objets. Le canal peut être établi via les bases de données et/ou le module de gestion d'association qui collecte les informations sur les objets numériques du périmètre.

Dans un autre mode de réalisation de l'invention, il est proposé un produit programme d'ordinateur qui comprend des instructions de code de programme pour la mise en œuvre du procédé précité (dans l'un quelconque de ses différents modes de réalisation), lorsque le programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en œuvre le procédé précité (dans l'un quelconque de ses différents modes de réalisation).
L'invention concerne également un système d'interaction entre un premier objet numérique et au moins un deuxième objet numérique, lesdits premier et deuxième objets numériques étant représentatifs respectivement d'un premier et deuxième dispositif, le système comprenant :
- des moyens d'obtention, pour chacun des premier et deuxième objets numériques, d'au moins une information, dite propriété fonctionnelle, représentative d'au moins une fonction du dispositif représenté par l'objet numérique concerné ;
- des moyens de mémorisation d'une association entre au moins une fonction du premier dispositif, dite première fonction, et au moins une fonction du deuxième dispositif, dite deuxième fonction, l'association étant définie à partir des propriétés fonctionnelles obtenues;
- des moyens d'établissement d'une liaison de communication via au moins un réseau entre un premier équipement communicant apte à piloter le premier dispositif et un deuxième équipement communicant apte à piloter le deuxième dispositif,
- en cas de déclenchement d'une exécution par le premier dispositif d'une première fonction et lorsqu'une association est mémorisée entre ladite première fonction et une dite deuxième fonction d'un deuxième dispositif, des moyens d'envoi d'une notification du premier équipement communicant vers le deuxième équipement communicant au travers de ladite liaison de communication afin de déclencher l'exécution de ladite deuxième fonction par ledit deuxième dispositif.

Avantageusement, le système d'interaction comprend des moyens de mise en œuvre des étapes qu'il effectue dans le procédé tel que décrit précédemment, dans l'un quelconque de ses différents modes de réalisation.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente les principales étapes d'un mode de réalisation particulier du procédé selon l'invention ;
- la figure 2 illustre une première mise en œuvre de la technique de l'invention, par l'équipement central d'un SIG local et l'équipement central d'un SIG distant ;
- la figure 3 illustre une deuxième mise en œuvre de la technique de l'invention, par l'équipement central d'un SIG local et un objet réel distant ;
- les figures 4a et 4b illustrent une troisième mise en œuvre de la technique de l'invention, par un objet réel local et un objet réel distant, respectivement via une plateforme spécifique ou sans plateforme spécifique ;
- la figure 5 présente la structure d'un module de gestion d'associations, selon un mode de réalisation particulier de l'invention.

### 5. DESCRIPTION DÉTAILLÉE

Sur toutes les figures du présent document, les éléments et étapes identiques sont désignés par une même référence numérique.

### 5.1 Principe général de la technique proposée

Il est proposé une technique d'interaction entre un premier objet numérique et au moins un deuxième objet numérique via l'association d'au moins une fonction, dite première fonction, du premier objet numérique représentatif d'un dispositif avec au moins une fonction, dite deuxième fonction, du deuxième objet numérique représentatif d'un dispositif, de façon à ce que le déclenchement de l'exécution de la première fonction par le premier dispositif déclenche l'exécution de la deuxième fonction par le deuxième dispositif.

Les deux dispositifs sont donc ainsi associés, ou intriqués, via leurs fonctions respectives.

L'invention, selon ses différents modes de réalisation, permet ainsi l'intrication d'une pluralité de dispositifs, ou objets concrets (représentés par des objets numériques) via leurs fonctions respectives. Ainsi, un premier dispositif présentant plusieurs fonctions peut être intriqué avec un ou plusieurs dispositifs distincts.

De plus, l'invention, selon ses différents modes de réalisation particuliers, permet l'intrication d'une pluralité de dispositifs pouvant être localisés dans des périmètres géographiques différents.

Enfin, l'invention, selon ses différents modes de réalisation particuliers, permet de proposer à un ou plusieurs utilisateurs une pluralité d'intrications de dispositifs de manière totalement automatique, c'est-à-dire sans intervention de l'utilisateur, ou partiellement automatique, c'est-à-dire en tenant compte par exemple de paramètres saisis par un utilisateur.

Un objet numérique représente un dispositif doté de fonctions, dont au moins une peut être déclenchée.

Un objet numérique représente par ailleurs un objet réel ou virtuel, auquel est associé une localisation.

### 5.1.1 Fonctions des objets numériques

Lorsque l'objet numérique représente un objet réel, une fonction de cet objet numérique est une fonction de cet objet réel : cet objet réel intègre ou correspond au dispositif représenté par cet objet numérique, dispositif dont les fonctions sont listées en tant que propriétés fonctionnelles de l'objet numérique.

Lorsque l'objet numérique représente un objet virtuel, une fonction de cet objet numérique est une fonction logicielle et/ou matérielle mise en œuvre par un dispositif, représenté par l'objet numérique, intégré dans un objet concret.

Des exemples d'une telle fonction d'objet numérique sont : une fonction de capture d'image d'un équipement de capture d'image (appareil photo, caméra, etc), une fonction d'affichage d'image d'un équipement, une fonction logicielle de traitement d'image ou de données, une fonction d'allumage d'une lampe ou d'un équipement, une fonction logicielle d'envoi de message, une fonction d'envoi d'un signal de commande, une fonction de saisie d'objet par un robot, etc.

### 5.1.2 Equipement communicant gérant un ou plusieurs dispositifs

Une fonction d'un premier dispositif qui est associée à une autre fonction d'un autre dispositif est exécutable ou déclenchable par un premier équipement communicant : l'équipement communicant intègre le dispositif ou est susceptible de transmettre à ce premier dispositif des commandes/notifications pour déclencher une ou des fonctions de ce premier dispositif. Dans le cas où le dispositif est intégré dans un équipement communicant, par exemple dans le cas d'un dispositif qui est une application logicielle exécutée dans un terminal mobile, c'est cet équipement lui-même qui peut servir d'équipement communicant pour le dispositif.

Ce premier équipement communicant est en particulier apte à envoyer une notification vers un autre équipement communicant en cas d'exécution par le premier dispositif d'une fonction associée à une autre fonction d'un autre dispositif, et, inversement, apte à recevoir une notification d'un autre équipement communicant en cas d'exécution par un autre dispositif d'une autre fonction associée à une fonction du premier dispositif.

Ce premier équipement communicant est en outre relié à la base de données référençant l'objet numérique qui représente le premier dispositif ou incorpore cette base de données.

Ce premier équipement communicant peut être un équipement communicant commun à plusieurs dispositifs qu'il gère, par exemple un équipement central d'un périmètre géographique local, communiquant avec un autre équipement central d'un périmètre géographique distant, un dispositif de pointage ou un dispositif pointé dans le périmètre géographique local, un terminal mobile incorporant la base de données, etc.

Ainsi chaque objet numérique référencé dans une base de données représente un dispositif associé dont les fonctions ont vocation à être associées à celle(s) d'autres dispositifs, au moins un équipement communicant étant en charge de piloter chacun de ces dispositifs, de recevoir et d'émettre les notifications concernant l'exécution de fonction(s) par ce(s) dispositif(s) associé(s).

### 5.1.3 Connexion entre les équipements communicants

Afin de permettre à un premier équipement communicant d'émettre une notification vers un deuxième équipement communicant, une liaison de communication est établie entre eux, au travers d'au moins un réseau. Dans ce but, chacun des équipements communicants s'enregistre auprès d'un serveur commun, par exemple un serveur Web ou un serveur de données dans un « cloud » ou un réseau privé.

Dans un mode de réalisation, chacun des équipements communicants transmet à ce serveur des données de connexion à cet équipement communicant ainsi qu'une identification de cet équipement qui est indépendante des données de connexion. Ainsi, quel que soit le réseau ou l'endroit dans lequel se trouve un équipement communicant, il pourra être joint par un autre équipement communicant. Les données de connexion peuvent comprendre par exemple une adresse IP et un port de communication TCP.

Les données de connexion d'un équipement communicant sont mémorisées en association avec les objets numériques représentant les dispositifs qui peuvent être commandés par l'intermédiaire de cet équipement communicant.

Dans une alternative, chacun des équipements communicants exécute une application logicielle, par exemple une application web ou un web service, et se connecte au moyen de cette application au serveur central. Ainsi le serveur central n'a pas besoin de stocker des données de connexion, et peut néanmoins transmettre des notifications à l'application logicielle via la connexion établie par l'application logicielle.

Dans le cas d'enregistrement de données de connexion, celles-ci sont partagées avec les autres équipements communicants d'un même utilisateur ou d'un même groupe d'utilisateurs de manière à ce que deux quelconques de ces équipements communicants puissent établir une liaison de communication entre eux sans passer par le serveur central. Dans le cas contraire, le serveur central se charge de transmettre les informations reçues d'un équipement vers un autre équipement, chacun des équipements communicants se connectant à ce serveur central pour en recevoir des notifications au moment voulu et/ou pour lui envoyer des notifications à chaque fois que nécessaire. Des mécanismes connus d'abonnement à des notifications sont utilisables à cet endroit.

### 5.1.4 Base(s) de données de référencement des objets numériques

Dans un mode de réalisation, chaque équipement communicant gère une base de données référençant le ou les objets numériques représentant le ou les dispositifs que cet équipement gère et auxquels il peut envoyer des signaux de commande ou notification pour déclencher des fonctions. Dans ce mode de réalisation, chaque équipement communicant se connecte à un autre équipement communicant pour obtenir les propriétés fonctionnelles des objets numériques référencé dans la base de données de cet autre équipement et définir les associations à créer. Une fois les associations entre fonctions définies, les informations sur ces associations sont transmise à l'autre équipement communicant pour mémorisation.

Dans une alternative de réalisation, une base de données centrale, gérée par le serveur central, commune à tous les objets numériques représentant le ou les dispositifs que les différents équipements gèrent est utilisée. Dans cette alternative, une fois qu'un équipement a défini des associations entre des fonctions définies, cet équipement peut en stocker une définition dans cette base de données centrale. Les autres équipements sont alors notifiés par le serveur central du stockage de ces définitions dans la base de données centrale et peuvent les télécharger et mémoriser localement.

Quelle que soit l'alternative, les objets numériques sont référencés dans une base de données en association avec une identification de l'équipement communicant qui gère le dispositif dont les fonctions sont associées et/ou à associer, afin de pouvoir obtenir, à partir de cette identification, des données de connexion à cet équipement communicant permettant l'envoi de notification vers cet équipement communicant.

### 5.1.5 Notification suite à l'exécution d'une fonction

Dès lors qu'une première fonction d'un premier dispositif, géré par un premier équipement communicant, est exécutée, le premier équipement communicant en a connaissance : soit parce qu'il est notifié de cette exécution par le dispositif en question, soit parce que c'est le premier équipement communicant qui a été utilisé pour déclencher cette exécution, soit encore parce que le premier équipement communicant dispose de moyens de détection des fonctions exécutées par ce dispositif.

Lorsque, en outre, une association avec une deuxième fonction d'un deuxième dispositif a été mémorisée pour cette première fonction, le premier équipement communicant notifie le deuxième équipement communicant qui gère ce deuxième dispositif, afin que ce deuxième équipement déclenche l'exécution de cette deuxième fonction. Cet envoi de notification peut être effectué en passant par l'intermédiaire du serveur central, soit directement d'un équipement communicant à un autre, lorsqu'il dispose des données de connexion nécessaires.

### 5.1.6 Objets réels ou virtuels pour le pointage

Par ailleurs, les objets numériques peuvent être représentatifs d'objets purement virtuels ou d'objets réels de l'environnement dans lequel est mise en œuvre l'invention, selon ses différents modes de réalisation particuliers.

Par exemple, pour un réfrigérateur qui est un objet réel, on peut créer et stocker dans la base de données un objet numérique « réfrigérateur », dont la composante géométrique définit la position géographique du réfrigérateur.

Selon un autre exemple, pour un objet purement virtuel, la composante géométrique définit une position géographique indépendamment de la présence ou non d'un objet réel à cette position géographique. Par exemple, l'objet virtuel correspond à un emplacement donné sur un mur, même en l'absence d'objet ou de caractéristique particulière de ce mur à cet emplacement.

Le rôle des objets réels ou virtuels est de servir de cible de pointage pour l'identification d'un dispositif associé dont les fonctions sont à exécuter ou à associer à celle(s) d'un autre dispositif. Ainsi quand la position d'un objet réel ou virtuel est pointée par un dispositif de pointage, il est possible de trouver dans la base de données quel est l'objet numérique dont la position est pointée par ce dispositif de pointage, et donc de déterminer quel est le dispositif associé, représenté par cet objet numérique, dont une fonction est à exécuter ou à associer à celle d'un autre objet numérique.

Dans le cas d'un objet virtuel, la position associée à l'objet virtuel peut être différente de la position du dispositif représenté par l'objet numérique qui représente cet objet virtuel.

Dans le cas d'un objet réel, la position associée à l'objet réel peut être différente de la position du dispositif représenté par l'objet numérique qui représente cet objet réel. En pratique, l'objet réel et le dispositif seront une seule et même chose afin de faciliter la mémorisation par l'utilisateur des positions et des dispositifs associés.

### 5.1.7 Règles d'associations de fonctions

Différentes règles d'associations peuvent être définies pour associer des fonctions de dispositifs entre elles.

Selon une première règle d'associations, on associe deux fonctions lorsqu'une donnée de sortie d'une première fonction est utilisable comme donnée d'entrée d'une deuxième fonction. Dans ce cas, l'exécution de la deuxième fonction est déclenchée pour traiter au moins une donnée traitée pendant l'exécution de la première fonction.

Par exemple, si l'on considère une première fonction de capture d'images et une deuxième fonction d'affichage d'images. Ces deux fonctions peuvent être associées, selon cette première règle d'associations, de manière à ce que le déclenchement de la capture d'une image, par une caméra par exemple, déclenche l'exécution de l'affichage des images capturées par un smartphone par exemple.

Selon un autre exemple, si l'on considère la fonction d'un smartphone permettant de mesurer sa position relativement à un repère fixe dans l'espace et par exemple de fournir deux angles par rapport à une orientation de base, et une des fonctions d'une caméra permettant de recevoir des paramètres angulaires et de s'orienter dans cette même direction, alors on peut associer ces deux objets via leurs fonctions précitées, selon la première règle d'associations. De cette manière, lorsqu'un utilisateur opérera un mouvement avec son smartphone, et donc déclenchera la première fonction, cela déclenchera un mouvement équivalent de la caméra associée. Plus précisément, un smartphone est intriqué avec une caméra distante via leurs positions respectives si certains paramètres évoluent de la même façon à un facteur multiplicatif près. Ainsi, la rotation d'un smartphone à bout de bras, induit une rotation d'une caméra distante d'une valeur égale aux paramètres d'orientation récoltés par les gyroscopes et magnétomètres du smartphone. Le smartphone propose entre autres des paramètres d'orientation en sortie qui sont injectés en entrée de la caméra distante.

Selon encore un exemple, si une camera est intriquée avec un téléviseur distant, via leurs positions respectives, il est possible de visualiser sur l'écran du téléviseur ce qu'enregistre la caméra. La sortie de la caméra est une vidéo. L'entrée du téléviseur est aussi une vidéo.

Selon une deuxième règle d'associations, on associe deux fonctions identiques, de sorte que deux objets ainsi associés soient toujours dans le même état courant. De cette manière, le déclenchement de l'exécution d'une fonction par un objet déclenche l'exécution de la fonction correspondante sur l'objet associé. Cette deuxième règle d'associations permet d'obtenir une intrication dite forte entre deux objets.

Par exemple, si l'on considère deux téléviseurs dans deux salles de visioconférence distantes A et B, leur intrication par application de cette deuxième règle d'associations permettra d'allumer le téléviseur dans la salle B lorsque le téléviseur de la salle A est allumé. Une action d'un utilisateur sur un des objets intriqués, déclenchant ainsi l'exécution d'une fonction, permet d'agir à distance de la même manière sur le ou les objets associés.

Selon un autre exemple, on considère deux pièces distantes A et B dont les interrupteurs permettant de gérer la lumière sont intriqués, par leurs fonctions d'allumage, d'extinction et/ou de réglage de l'intensité de la lumière. Si un utilisateur agit sur un interrupteur dans une pièce A, par exemple pour baisser la lumière, la lumière baisse aussi dans la pièce B.

Si la lumière baisse correctement dans la pièce A, c'est que cela se produit également correctement dans la pièce B. En revanche, si la lumière ne baisse pas dans la pièce A, alors que l'utilisateur agit en ce sens sur l'interrupteur, c'est qu'il y a un problème dans la pièce B ou dans l'intrication entre les interrupteurs.

En effet, cette deuxième règle d'association, entrainant une intrication forte entre objets, permet de refléter, par l'état courant d'un objet, l'état courant d'un objet intriqué.

Selon encore un autre exemple d'intrication forte, on considère plusieurs studios d'enregistrement, présentant chacun un interrupteur permettant de commander le voyant « Silence ». Tous ces interrupteurs sont intriqués de telle sorte que lorsqu'un utilisateur agit sur l'un d'eux, tous les interrupteurs prendront le même état pour commander le voyant « Silence » pour l'ensemble des studios.

Selon ce mode de réalisation de l'invention, les différentes associations effectuées, suite à l'application, pour chaque propriété fonctionnelle obtenue pour la pluralité d'objets numériques considérés, des différentes règles d'associations définies, sont mémorisées dans une base de données d'associations, permettant ainsi de référencer, par leurs associations de fonctions, les objets numériques considérés.

De plus, selon un aspect particulier de l'invention, les objets numériques sont informés des associations effectuées entre leurs fonctions et des fonctions d'objets numériques distincts. Ainsi, s'il existe une interface utilisateur permettant à un utilisateur d'un objet de visualiser quels objets lui sont associés, et via quelles fonctions, cette interface est mise à jour dès qu'une association avec une fonction de l'objet est effectuée et mémorisée. De cette manière, un utilisateur peut être tenu au courant des objets intriqués avec l'objet qu'il utilise.

### 5.1.8 Déclenchement de l'exécution d'une fonction

Une fois les différentes associations entre les fonctions des objets numériques considérés mémorisées, la mise en œuvre« concrète » de l'intrication, c'est-à-dire au moment où un objet est utilisé, nécessite plusieurs étapes successives, ainsi que l'établissement de canaux de communication entre les différents objets intriqués, via des équipements communicants aptes à piloter ces objets.

En effet, jusqu'à présent, l'association des fonctions n'a pas encore nécessité de communication entre les dispositifs représentés par les objets numériques, mais uniquement des accès aux différentes bases de données permettant de collecter les différentes propriétés fonctionnelles des objets numériques considérés.

Une première étape consiste à recevoir au moins une notification/information représentative d'une exécution, par un premier dispositif représenté par le premier objet numérique, de la première fonction. Le premier équipement communicant est ainsi informé de l'exécution de la première fonction: soit parce qu'il est notifié de cette exécution par le premier dispositif lorsque celui-ci est capable d'envoyer des notifications, soit parce que c'est le premier équipement communicant qui a été utilisé pour déclencher cette exécution, soit encore parce que le premier équipement communicant dispose de moyens de détection des fonctions exécutées par le premier dispositif.

Sur réception d'une telle information, le premier équipement communicant détermine, en interrogeant le module de gestion des associations ou une base de données d'associations entre objets numériques, si la première fonction est associée à une deuxième fonction d'un deuxième dispositif.

Dans l'affirmative, la deuxième fonction doit être déclenchée et le premier équipement communicant et/ou le module de gestion d'association concerné doit envoyer une notification vers un deuxième équipement gérant le deuxième dispositif pour provoquer ce déclenchement. Lorsque c'est le module de gestion d'association qui envoie la notification, le premier équipement communicant envoie préalablement une première notification vers ce module de gestion d'association.

Une liaison de communication est établie, si elle n'existe pas déjà, via un réseau pour transmettre une deuxième notification vers le deuxième équipement. Cet envoi de notification peut transiter par un serveur central. Dans ce cas, le serveur central peut en outre enrichir ou modifier la notification. La notification envoyée par le premier équipement et/ou celle reçue par le deuxième équipement comprend une identification de la première fonction et/ou de la deuxième fonction.

Le deuxième équipement reçoit la notification et identifie la deuxième fonction à déclencher. Soit la deuxième fonction est identifiée dans la notification, soit le deuxième équipement communicant l'identifie en interrogeant le module de gestion des associations ou une base de données d'associations entre objets numériques.

Puis le deuxième équipement communicant déclenche l'exécution de la deuxième fonction par le deuxième dispositif, par exemple par l'envoi d'un signal de commande vers le deuxième dispositif.

La liaison de communication qui est établie peut servir également pour transmettre des données, résultant de l'exécution de la première fonction, qui doivent être traitées par la deuxième fonction. Par exemple, quand la première fonction est une fonction de capture d'image et que la deuxième fonction est une fonction d'affichage d'image, chaque image capturée sera transmise via la liaison établie.

En alternative, une liaison de transmission de données supplémentaire est établie entre le premier dispositif et le deuxième dispositif pour la transmission des données résultant de l'exécution de la première fonction, qui doivent être traitées par la deuxième fonction, lorsque ces deux dispositifs sont dotés d'interface de communication leur permettant de communiquer avec un autre dispositif. Dans cette alternative, au moins un des équipements communicants associés et/ou le module de gestion d'association est chargé de transmettre les paramètres de connexion ou de communication qui permettent l'établissement de cette liaison de transmission de données supplémentaire.

Les différents liens de communication permettant la mise en œuvre de l'invention sont également décrits plus en détails pour les différents exemples d'implémentation de l'invention.

Par exemple, un appairage (de type Bluetooth par exemple) entre le module de gestion des associations et des objets réels peut être mis en œuvre, les notifications/informations/commandes pouvant être transmises via cette liaison d'appairage. Cela peut être le cas par exemple lorsque le module de gestion des associations est intégré dans un objet réel du système.

Selon un autre exemple, des communications de type WIFI, 3G ou encore ADSL peuvent être mises en œuvre, entre le module de gestion d'associations au sein d'un équipement spécifique, et les différents objets intriqués.

En résumé, il existe un canal de communication entre les objets intriqués mais ce canal n'est pas obligatoirement direct. Ainsi, le canal peut être établi entre les deux objets, ou via les bases de données et/ou un ou plusieurs équipements centraux de SIG.

De plus, les différents types de communication peuvent être utilisés successivement à différents moments de l'implémentation de l'invention. Ainsi, l'intrication entre deux objets (un smartphone et un autre objet) peut être initiée lorsque le smartphone est à proximité de l'objet par une communication de type Bluetooth. La mémorisation de cette association peut donc être effectuée grâce à cette communication de courte portée. Lorsque les objets s'éloignent, par exemple parce que l'utilisateur du smartphone s'éloigne de l'objet intriqué, la communication courte portée est interrompue et un autre type de communication, de type wifi par exemple, peut être utilisé pour maintenir l'intrication et permettre les éventuels échanges d'informations entre les deux objets, via un autre équipement distinct ou non. Lorsque les deux objets s'éloignent encore, des communications de type 3G et/ou ADSL peuvent être mises en œuvre, avec pour objectif de conserver l'intrication quelle que soit la distance entre les objets intriqués.

### 5.1.9 Contexte

La prise en compte d'informations de contexte permet, selon certains modes de réalisation de l'invention, d'appliquer ou non des règles d'associations, ou bien d'ajouter des restrictions de mise en œuvre des associations.

Par exemple, il est possible de mémoriser une association de fonctions avec des informations supplémentaires permettant de distinguer des cas particuliers, ou des contextes d'utilisation de cette association. Pour ce faire, des paramètres tels que les types d'objets (capteurs, actionneurs, récepteurs, émetteurs, vision, audio...), les sites de localisation des objets ou des données saisies par un utilisateur peuvent être pris en considération.

Ainsi, un objet peut être intriqué avec un autre objet via deux fonctions, dont l'exécution de l'une ne peut être déclenchée que sous certaines conditions suite au déclenchement de l'exécution de la fonction associée par l'autre objet. Ces conditions peuvent par exemple consister à n'autoriser le déclenchement de l'exécution de la fonction que lorsque l'objet est situé dans son périmètre géographique « d'origine » (et donc à interdire son exécution lorsque l'objet est sorti de son périmètre géographique).

Selon un autre exemple, les informations de contexte permettent de filtrer certaines possibilités d'intrication. Ainsi, à un utilisateur qui déteste l'utilisation des outils de vision, il ne sera pas proposé d'intrications avec des caméras. Pour ce faire, l'utilisateur peut saisir des « restrictions » d'application de l'invention, via par exemple une interface utilisateur. Ces informations de contexte liées à l'utilisateur sont ensuite prises en considération au moment de la mémorisation d'associations de fonctions ou de l'application des règles d'associations.

### 5.2 Description d'un mode de réalisation

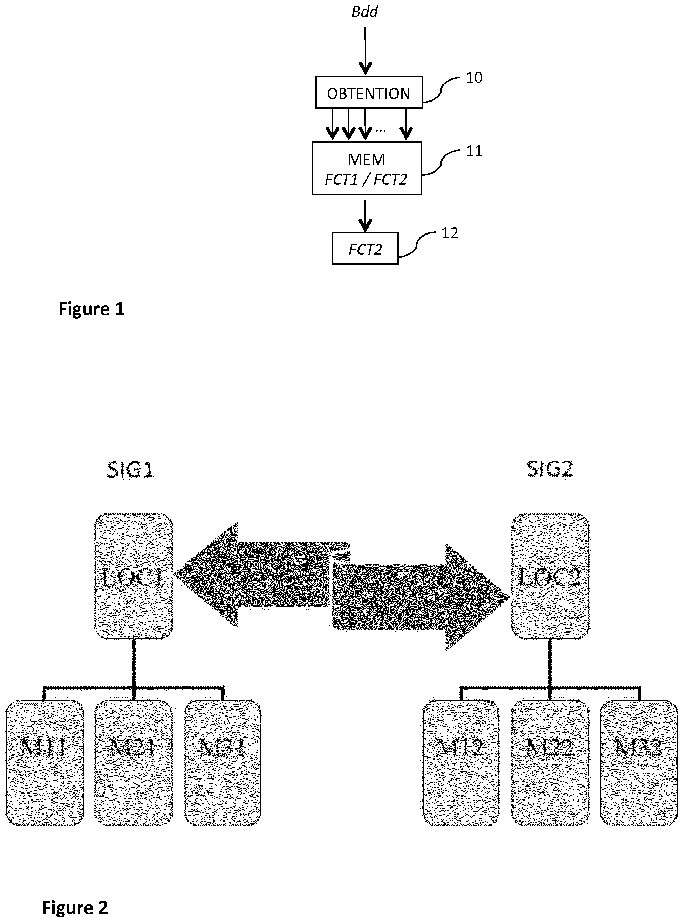

La figure 1 illustre les principales étapes du procédé d'interaction entre un premier objet numérique et au moins un deuxième objet numérique, selon un mode de réalisation de l'invention.

On considère, dans ce mode de réalisation, deux objets numériques *ON1* et *ON2,* représentatifs respectivement d'un premier dispositif D1 et d'un deuxième dispositif D2. Ces deux objets numériques *ON1* et *ON2* sont référencés dans au moins une base de données *Bdd* référençant des objets numériques. Chaque objet numérique est défini dans la base de données par un ensemble de données numériques comprenant au moins :
- un identifiant ;
- une composante géométrique, définissant une position géographique du dispositif représenté par cet objet numérique ; et
- une composante descriptive, définissant au moins une propriété fonctionnelle, représentative d'au moins une fonction de l'objet numérique

Selon ce mode de réalisation de l'invention, une première étape 10 d'obtention d'au moins une propriété fonctionnelle pour chacun des deux objets numériques *ON1* et *ON2* est mise en œuvre, par interrogation de la ou des bases de données référençant ces objets numériques *ON1* et *ON2,* ici la base de données bdd. Comme indiqué ci-dessus, une propriété fonctionnelle est représentative d'une fonction du dispositif représenté par l'objet numérique.

Ainsi, une propriété fonctionnelle peut être définie de manière codée selon un référentiel des fonctions (ou sous-fonctions) d'un dispositif, le référentiel servant à définir toutes les propriétés fonctionnelles possibles relatives aux fonctions d'un dispositif et permettant ainsi de définir des règles d'association entre fonctions relativement aux propriétés fonctionnelles utilisables.

Par exemple, une propriété fonctionnelle de capture d'image et une propriété fonctionnelle de déplacement de l'axe de visée selon un angle de rotation peuvent être représentatives d'une fonction de capture d'images dans n'importe quelle direction de visée offerte par une caméra « PTZ ».

Selon un autre exemple, une propriété fonctionnelle de réception d'image est représentative d'une fonction de récepteur d'un téléviseur, et une propriété fonctionnelle d'affichage d'images est représentative d'une fonction d'afficheur d'images de ce même téléviseur.

Une fois la ou les propriétés fonctionnelles obtenues pour chacun des deux objets numériques *ON1* et *ON2* précités, une étape 11 de mémorisation d'association entre une fonction *FCT1* du premier dispositif *D1* et une fonction *FCT2* du deuxième dispositif D2 est mise en œuvre. Cette association entre les fonctions *FCT1* et *FCT2* est mise en œuvre par application d'au moins une règle d'association aux propriétés fonctionnelles respectives obtenues pour chacun desdits premier et deuxième objets numériques *ON1* et *ON2.* Ainsi, à partir d'une pluralité de règles d'association prédéfinies, on peut en trouver une qui permet, une fois appliquée aux propriétés fonctionnelles préalablement obtenues pour chaque objet numérique, d'associer automatiquement deux fonctions respectives des dispositifs correspondants.

Par exemple, une règle d'association consister à détecter qu'une donnée de sortie d'une première fonction est utilisable comme donnée d'entrée d'une deuxième fonction.

Selon un autre exemple, une règle d'association consiste à détecter que deux fonctions sont identiques et peuvent donc être liées de manière à ce que les dispositifs présentant ces fonctions aient exactement le même comportement une fois intriqués.

Cette étape 11 de mémorisation d'association peut être mise en œuvre pour une pluralité d'objets numériques référencés dans la base de données *bdd,* permettant ainsi d'intriquer une pluralité de dispositifs entre eux.

Enfin, une étape 12 de déclenchement de l'exécution de la fonction *FCT2* par le dispositif *D2* est mise en œuvre, en cas de déclenchement d'une exécution, par le dispositif D1, de la fonction *FCT1.*

Ainsi, lorsqu'un utilisateur effectue une action sur un objet réel *01,* c'est-à-dire déclenche l'exécution de la fonction *FCT1* de cet objet réel *01,* alors le procédé selon ce mode de réalisation de l'invention permet de déclencher l'exécution de la fonction *FCT2* d'un dispositif *D2,* les deux fonctions *FCT1* et *FCT2* ayant été préalablement associées.

Par exemple, si l'on considère que l'objet réel *01* est une caméra et que l'objet réel *02* est le smartphone de l'utilisateur, et que les fonctions respectives de captation d'images de la caméra et d'affichage d'images du smartphone ont été préalablement associées, alors lorsque l'utilisateur déclenche la fonction de captation d'images de la caméra, il peut visualiser ces images sur l'écran de son smartphone.

Les différentes étapes décrites ci-dessus sont par exemple mises en œuvre par un module de gestion d'associations pouvant être, selon les différents modes de réalisation particuliers de l'invention, présent au sein d'un équipement spécifique du système de mise en œuvre de l'invention, ou bien intégré au sein d'un équipement communicant gérant les objets numériques ou encore au sein d'un objet réel représenté par un objet numérique du système de mise en œuvre de l'invention. C'est ce module de gestion d'associations qui obtient/collecte les différentes propriétés fonctionnelles associées aux objets numériques, qui applique les règles d'associations et mémorise les associations obtenues puis permet le déclenchement de l'exécution d'une fonction d'un objet réel suite au déclenchement d'une fonction associée d'un autre objet réel ou d'un dispositif. Pour ce faire, ce module de gestion reçoit des notifications/informations relatives au déclenchement de l'exécution de fonctions par certains dispositifs et émet des commandes/notifications de déclenchement de l'exécution de fonctions par les dispositifs associés.

On décrit ci-après plus en détails les différentes règles d'associations pouvant être définies pour associer des dispositifs, ainsi que les différentes étapes permettant le déclenchement de l'exécution d'une fonction par un deuxième dispositif associé suite au déclenchement de l'exécution d'une fonction par un premier dispositif. Les différents canaux de communication utilisés sont également décrits ci-après.

### 5.2.1 Premier exemple d'implémentation

On décrit maintenant un premier exemple d'implémentation du procédé d'interaction selon l'invention, en relation avec la figure 2.

On considère, dans cet exemple, deux Systèmes d'information Géographique, SIG1 et SIG2, comprenant chacun un équipement central accédant à une base de données référençant une pluralité d'objets numériques, par exemple en décrivant la position et les propriétés/attributs/fonctions de chaque objet se trouvant dans un périmètre (une zone géographique) identifié.

Ainsi, dans cet exemple, le SIG1 permet de gérer la pluralité d'objets (encore appelés dispositifs ou machines) situés dans le périmètre géographique noté LOC1, comme par exemple les objets M11, M21 et M31. Le SIG2 quant à lui permet de gérer la pluralité d'objets (encore appelés dispositifs ou machines) situés dans le périmètre géographique noté LOC2, comme par exemple les objets M12, M22 et M32.

Le procédé d'interaction selon ce mode de réalisation de l'invention permet donc notamment d'intriquer entre eux les objets de chaque SIG1 et SIG2, ainsi que d'intriquer un ou plusieurs objets du SIG1 avec un ou plusieurs objets du SIG2.

Par exemple, si l'objet M11 est un smartphone et l'objet M32 une caméra, alors M11 (situé dans le périmètre géographique LOC1) peut être intriqué à M32 (situé dans le périmètre géographique LOC2), par exemple via leurs fonctions de mouvement respectives (une des fonctions du smartphone étant de mesurer sa position relativement à un repère fixe dans l'espace et par exemple de fournir deux angles par rapport à une orientation de base, et une des fonctions de la caméra étant de recevoir des paramètres angulaires et de s'orienter dans cette même direction).

De ce fait, en tournant M11, c'est-à-dire en déclenchant l'exécution de la fonction de mouvement du smartphone, M32 tournera à distance automatiquement, les fonctions de mouvement des deux objets ayant été préalablement associées.

Selon ce premier exemple d'implémentation de l'invention, le module de gestion des associations est par exemple en relation à la fois avec l'équipement central du SIG1 et l'équipement central du SIG2, afin de pouvoir accéder, via ces équipements centraux, aux données stockées dans les bases de données des deux périmètres géographiques LOC1 et LOC2, et notamment aux propriétés fonctionnelles des objets numériques représentatifs des objets réels M11, M21, M31 et M12, M22 et M32.

De plus, le module de gestion communique avec ces équipements centraux pour informer les différents objets numériques des associations éventuelles de certaines de leurs fonctions avec celles d'autres objets numériques.

Le module de gestion communique également avec ces équipements centraux pour recevoir les notifications / commandes de déclenchement de l'exécution d'une fonction par un objet réel dans l'un des périmètres LOC1 ou LOC2, de façon à pouvoir ensuite déclencher l'exécution d'une fonction par un objet réel associé dans l'un des périmètres LOC1 ou LOC2. Pour ce faire, le module de gestion communique avec ces équipements centraux pour transmettre, à l'objet réel associé, une commande de déclenchement de l'exécution d'une fonction.

Selon des variantes de ce mode de réalisation, le module de gestion peut être intégré au sein de l'un des deux équipements centraux, ou d'un objet de l'un des deux périmètres, sous réserve de pouvoir mettre en œuvre les liens de communication précédemment décrits.

### 5.2.2 Deuxième exemple d'implémentation

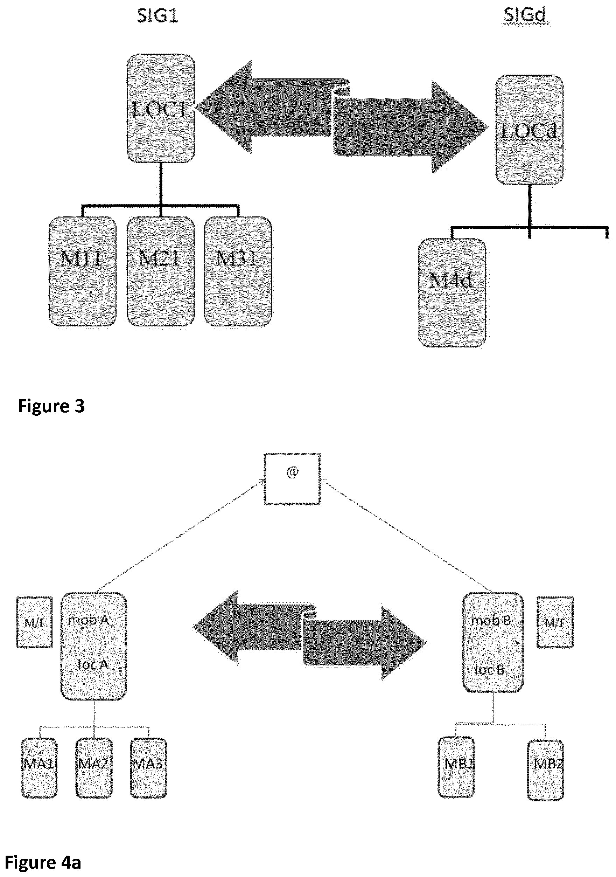

On décrit maintenant un deuxième exemple d'implémentation du procédé d'interaction selon l'invention, en relation avec la figure 3.

On considère, dans cet exemple, un Système d'information Géographique, SIG1, comprenant un équipement central accédant à une base de données référençant une pluralité d'objets numériques, par exemple en décrivant la position et les propriétés/attributs/fonctions de chaque objet se trouvant dans un périmètre (une zone géographique) identifié.

Ainsi, dans cet exemple, le SIG1 permet de gérer la pluralité d'objets (encore appelés dispositifs ou machines) situés dans le périmètre géographique noté LOC1, comme par exemple les objets M11, M21 et M31.

Par ailleurs, dans ce deuxième exemple, un mobile M41, préalablement localisé dans le périmètre géographique LOC1, s'éloigne de ce périmètre géographique LOC1, pour se situer dans un périmètre géographique noté LOCd, mais peut conserver, grâce à ce mode de réalisation de l'invention, la ou les intrications effectuées dans le périmètre géographique LOC1. Ainsi, même en s'éloignant, le mobile M41, devenu M4d dans le périmètre géographique LOCd, conserve les associations de ses fonctions préalablement mémorisées. Lorsque le mobile M4d se situe dans le périmètre géographique noté LOCd, c'est le mobile M4d qui est l'élément matériel de localisation, sans nécessité de créer un SIG pour le périmètre géographique LOCd.

Dans ce cas, le module de gestion est en relation avec l'équipement central du SIG1 et le mobile M41/M4d. Selon des variantes de ce mode de réalisation, le module de gestion peut être intégré au sein de l'équipement central de SIG1, ou du mobile M41, sous réserve de pouvoir mettre en œuvre les liens de communication précédemment décrits.

### 5.2.3 Troisième exemple d'implémentation

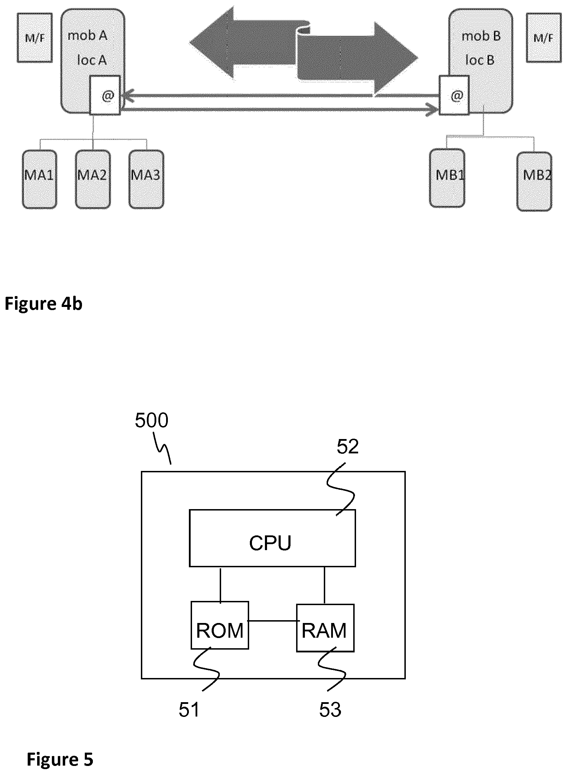

On décrit maintenant un troisième exemple d'implémentation du procédé d'interaction selon l'invention, en relation avec les figures 4a et 4b.

Aujourd'hui, un smartphone peut détecter automatiquement la présence d'autres équipements/machines autours de lui. En utilisant divers protocoles (Wifi, bluetooth, zigbee) et en demandant à chaque machine ce qu'elle sait faire, le smartphone est alors capable de constituer un fichier contenant :
- la liste des M machines avec lesquelles il est en mesure de communiquer ;
- les fonctions F disponibles pour chacune d'entres elles.

Le smartphone peut alors communiquer avec une plateforme spécifique @, par exemple noté module de gestion d'associations, afin de mettre en œuvre les différentes étapes de l'invention, selon ce mode de réalisation.

Dans cet exemple, illustré en figure 4a, le smartphone ou dispositif mobile Mob A devient « porteur » de la localisation loc A et détecte les machines MAI à MAn de son périmètre géographique loc A avec lesquels il peut dialoguer. Il constitue le fichier de configuration « M/F A », qu'il communique à la plateforme spécifique @, en indiquant le numéro du smartphone ou dispositif mobile Mob B avec lequel il souhaite réaliser l'intrication.

De son coté, le smartphone ou dispositif mobile Mob B réalise la même opération et communique à la plateforme son fichier de configuration « M/F B » ainsi que le numéro du smartphone Mob A.

La plateforme @ fusionne alors les fichiers de configuration « M/F A » et « M/F B », en fonction des règles d'association préalablement définies. Une fois les différentes intrications réalisées, la plateforme @ renvoie à chaque mobile Mob A et Mob B son fichier « M/F » actualisé ainsi que les informations pour l'établissement d'une connexion entre Mob A et Mob B. L'intrication entre les deux périmètres géographiques loc A et loc B est maintenant effective, via les mobiles Mob A et Mob B.

Dans une variante de ce mode de réalisation, illustré en figure 4b, le module de gestion d'associations n'est plus intégré au sein d'une plateforme spécifique @, mais dans chacun des mobiles Mob A et Mob B. Ainsi, le mobile Mob A entre en communication avec le mobile Mob B (par appel : GSM/ 3G /4G, ou par l'ouverture d'un lien IP) pour échanger :
- leurs fichiers M/F respectifs ;
- les règles d'associations qu'ils ont chacun défini.

Après analyse et traitement, chacun des mobiles Mob A et Mob B met à jour sa configuration et l'intrication entre les deux périmètres géographiques loc A et loc B est effective tant que la communication entre le mobile Mob A et le mobile Mob B est maintenue.

### 5.2.4 Quatrième exemple d'implémentation

Selon ce quatrième exemple d'implémentation (non illustré), l'intrication est mise en œuvre au niveau de deux périmètres géographiques, permettant de gérer l'ensemble des objets de ces périmètres géographiques comme s'ils étaient localisés dans le même périmètre géographique.

Par exemple, deux salles de réunion intriquées permettent une gestion de l'ensemble des machines/objets des deux salles comme si elles/ils étaient dans la même salle.

Selon un autre exemple de ce mode de réalisation, l'invention s'applique à des pièces de vies qui sont souvent reliées, comme par exemple deux salons dans deux domiciles distants. Ces deux salons peuvent être intriqués (intrication forte possible dans ce cas) pour visualiser en même temps un programme de télévision et ainsi partager les bons moments. Les téléviseurs démarreront en même temps sur les premières images du programme. Dans chaque salon, les participants pourront voir à la fois le programme et ce qui se passe dans le salon distant, et échanger des commentaires en direct. Une tierce personne arrivant dans l'un de ces salons pourra utiliser son smartphone et filmer l'ambiance de la salle à un moment du programme visualisé, qui sera retransmise automatiquement à distance sur le téléviseur ou smartphone distant....

Selon encore un autre exemple, une entreprise possède des locaux dans plusieurs sites géographiques différents du monde. Chaque bâtiment doit posséder la même pièce qui assure la même fonction (par ex : un local technique pour configurer les réseaux, ou une salle de visio-conférence). Cette pièce étant intriquée avec toutes ses « homologues », entrer dans l'une permet de : voir / manipuler / configurer tous les objets se trouvant dans toutes les autres.

### 5.3 Structure du système d'interaction

La figure 5 présente la structure du système d'interaction, selon un mode de réalisation particulier de l'invention.

Le système d'interaction 500 comprend une mémoire RAM 53, une unité de traitement 52, équipée par exemple d'un processeur, et pilotée par un programme d'ordinateur stocké dans une mémoire ROM 51.

A l'initialisation, les instructions de code du programme d'ordinateur sont par exemple chargées dans la mémoire RAM 53 avant d'être exécutées par le processeur de l'unité de traitement 52, permettant ainsi au système d'interaction 500 de mettre en œuvre les différents moyens suivants :
- des moyens d'obtention, pour chacun des premier et deuxième objets numériques, par interrogation d'au moins une dite base de données, d'au moins une information, dite propriété fonctionnelle, représentative d'au moins une fonction du dispositif représenté par l'objet numérique concerné ;
- des moyens de mémorisation d'une association entre au moins une fonction du premier dispositif, dite première fonction, et au moins une fonction du deuxième dispositif, dite deuxième fonction, l'association étant définie à partir des propriétés fonctionnelles obtenues;
- des moyens d'établissement d'une liaison de communication via au moins un réseau entre un premier équipement communicant apte à piloter le premier dispositif et un deuxième équipement communicant apte à piloter le deuxième dispositif,
- en cas de déclenchement d'une exécution par le premier dispositif d'une première fonction et lorsqu'une association est mémorisée entre la première fonction et une dite deuxième fonction d'un deuxième dispositif, des moyens d'envoi d'une notification du premier équipement communicant vers le deuxième équipement communicant au travers de ladite liaison de communication afin de déclencher l'exécution de la deuxième fonction par le deuxième dispositif.

La figure 5 illustre seulement une manière particulière, parmi plusieurs possibles, de réaliser la technique de l'invention dans le système d'interaction 500, indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non amovible, ce médium de stockage étant lisible partiellement ou totalement par un ordinateur ou un processeur.

## Revendications

1. Procédé d'interaction entre un premier objet numérique et au moins un deuxième objet numérique, lesdits premier et deuxième objets numériques étant représentatifs respectivement d'un premier et deuxième dispositif, ledit procédé comprenant les étapes suivantes :
- obtention, pour chacun desdits premier et deuxième objets numériques, d'au moins une information, dite propriété fonctionnelle, représentative d'au moins une fonction du dispositif représenté par l'objet numérique concerné ;
- mémorisation d'une association entre au moins une fonction dudit premier dispositif, dite première fonction, et au moins une fonction dudit deuxième dispositif, dite deuxième fonction, ladite association étant définie à partir des propriétés fonctionnelles obtenues et ladite association étant déterminée par application d'au moins une règle d'association aux propriétés fonctionnelles respectives obtenues pour chacun desdits premier et deuxième objets numériques ;
- établissement d'une liaison de communication via au moins un réseau entre un premier équipement communicant apte à piloter le premier dispositif et un deuxième équipement communicant apte à piloter le deuxième dispositif,
- en cas de déclenchement d'une exécution par le premier dispositif d'une première fonction et lorsqu'une association est mémorisée entre ladite première fonction et une dite deuxième fonction d'un deuxième dispositif, envoi d'une notification du premier équipement communicant vers le deuxième équipement communicant au travers de ladite liaison de communication afin de déclencher l'exécution de ladite deuxième fonction par ledit deuxième dispositif.

2. Procédé selon la revendication 1, comprenant les étapes suivantes :
- présentation des propriétés fonctionnelles obtenues à un utilisateur du premier ou du deuxième dispositif,
- mise à disposition de l'utilisateur de moyens de sélection de propriétés fonctionnelles représentatives de fonctions à associer, et
- obtention de données d'association représentatives d'une association à mémoriser entre des fonctions représentées par des propriétés fonctionnelles sélectionnées par l'utilisateur.

3. Procédé selon la revendication 1, comprenant les étapes suivantes :
- détection de la présence du deuxième équipement communicant dans une zone de détection autour du premier équipement communicant ;
- obtention par le premier équipement communicant d'au moins une propriété fonctionnelle du deuxième dispositif;
- envoi par le premier équipement communicant d'une requête de mémorisation d'association vers le deuxième équipement communicant afin de déclencher ladite étape de mémorisation,
l'envoi de ladite notification étant effectué lorsque le deuxième équipement communicant est sorti de ladite zone de détection.

4. Procédé selon la revendication 1, comprenant les étapes suivantes :
- obtention, pour un troisième objet numérique représentatif d'un troisième dispositif, d'au moins une information, dite propriété fonctionnelle, représentative d'au moins une fonction du troisième dispositif;
- mémorisation d'une association entre ladite première fonction du premier dispositif, et au moins une fonction dudit troisième dispositif, dite troisième fonction;
- en cas de détection d'une association mémorisée, d'une part, entre ladite troisième fonction et ladite première fonction, et, d'autre part, entre ladite deuxième fonction et ladite première fonction, mémorisation d'une association entre ladite troisième fonction du troisième dispositif et ladite deuxième fonction du deuxième dispositif;
- en cas de déclenchement d'une exécution par ledit premier dispositif de ladite première fonction et lorsqu'une association est mémorisée entre ladite première fonction et ladite troisième fonction, déclenchement d'une exécution par le troisième dispositif de ladite troisième fonction,
- en cas de déclenchement d'une exécution par ledit deuxième dispositif de ladite deuxième fonction et lorsqu'une association est mémorisée entre ladite deuxième fonction et ladite troisième fonction, déclenchement d'une exécution par le troisième dispositif de ladite troisième fonction.

5. Procédé selon la revendication 1, dans lequel le premier objet numérique est représentatif d'au moins un objet réel ou virtuel localisé dans un périmètre géographique, dit périmètre géographique local, une position géographique d'au moins un objet réel ou virtuel, représenté par un objet numérique et localisé dans un périmètre géographique distant du périmètre géographique local, est mémorisée dans une base de données dite distante référençant des objets numériques, un équipement distant accédant à la base de données distante étant adapté pour déterminer, en fonction de positions géographiques mémorisées pour des objets dans le périmètre géographique distant et d'informations de pointage sur la position géographique et l'orientation d'un dispositif de pointage utilisé dans le périmètre géographique local, si la position d'un des objets numériques est pointée par le dispositif de pointage donné, le procédé comprenant les étapes suivantes :
- établissement d'un canal de communication entre un équipement communicant, dit distant, accédant à la base de données distante et un équipement communicant, dit local, localisé dans le périmètre géographique local, apte à obtenir les informations de pointage du dispositif de pointage local ;
- réception, par l'équipement communicant distant, via le canal de communication, des informations de pointage;
- identification, par l'équipement communicant distant, en fonction d'une part des informations de pointage reçues et d'autre part d'une position virtuelle de départ et d'une orientation virtuelle de départ attribuées au dispositif de pointage local dans le périmètre géographique distant, d'un objet numérique du périmètre géographique distant dont la position géographique est pointée virtuellement par le dispositif de pointage local,
- l'étape de mémorisation d'une association étant déclenchée pour l'objet numérique identifié.

6. Procédé selon la revendication comprenant qu'il les étapes suivantes :
- mise à jour d'une base de données d'associations référençant les objets numériques définis au moins par leurs propriétés fonctionnelles obtenues ;
- transmission, aux premier et deuxième équipements communicants, d'au moins une information représentative de l'association des première et deuxième fonctions.

7. Procédé selon la revendication procédé comprenant
- selon une dite règle d'association, l'étape de mémorisation d'une association entre ladite première fonction et ladite deuxième fonction est mise en œuvre lorsqu'une donnée de sortie de ladite première fonction est utilisable comme donnée d'entrée de ladite deuxième fonction,
- l'exécution de ladite deuxième fonction dudit deuxième dispositif étant déclenchée pour traiter au moins une donnée traitée pendant l'exécution de ladite première fonction.

8. Procédé selon la revendication le procédé comprenant, selon une dite règle d'association, l'étape d'association tient également compte d'au moins une information représentative d'un contexte d'utilisation des dispositifs.

9. Procédé selon la revendication procédé étant tel que, selon une dite règle d'association,
lorsqu'une première fonction, dite de changement d'état, du premier dispositif, provoque un changement d'état du premier dispositif vers un état identique à celui dans lequel le deuxième dispositif se trouve suite à une exécution d'une deuxième fonction, dite de changement d'état, du deuxième dispositif,
l'étape de mémorisation d'une association est mise en œuvre entre la première fonction de changement d'état du premier dispositif et la deuxième fonction de changement d'état du deuxième dispositif de sorte que, en cas de déclenchement d'une exécution par ledit premier dispositif de la première fonction de changement d'état, la deuxième fonction de changement d'état est déclenchée et le deuxième dispositif se retrouve dans le même état que le premier dispositif.

10. Procédé selon la revendication le procédé étant tel que le premier objet numérique est représentatif d'au moins un premier objet réel ou virtuel localisé dans un premier périmètre géographique et le deuxième objet numérique est représentatif d'au moins un deuxième objet réel ou virtuel localisé dans un deuxième périmètre géographique, distant du premier périmètre géographique,
et tel que les premier et deuxième objets numériques sont référencés respectivement dans une base de données d'objets numériques locale et une base de données d'objets numériques distante et en ce que l'étape d'obtention est mise en œuvre par interrogation desdites bases de données d'objets numériques locale et distante.

11. Procédé selon la revendication le procédé étant tel qu'il est mis en œuvre par au moins un module de gestion d'associations ayant accès à au moins une dite base de données d'objets numériques.

12. Procédé selon la revendication 11, le procédé étant tel que ledit module de gestion d'associations communique d'une part avec un équipement communicant local ayant accès à la base de données d'objets numériques locale et d'autre part avec un équipement communicant distant ayant accès à la base de données d'objets numériques distante.

13. Procédé selon la revendication 11, le procédé étant tel que ledit module de gestion d'associations communique d'une part avec un équipement communicant local ayant accès à la base de données d'objets numériques locale ou un équipement communicant distant ayant accès à la base de données d'objets numériques distante et d'autre part avec l'un des dispositifs.

14. Procédé selon la revendication 11, le procédé étant tel que, les premier et deuxième dispositifs étant intégrés respectivement dans un premier et deuxième équipements communicants aptes à communiquer entre eux, le procédé est mis en œuvre par le premier ou deuxième équipement communicant.

15. Produit programme d'ordinateur, comprenant des instructions de code de programme pour la mise en œuvre du procédé selon au moins une des revendications 1 à 14, lorsque ledit programme est exécuté sur un ordinateur.

16. Médium de stockage lisible par ordinateur et non transitoire, stockant un programme d'ordinateur comprenant un jeu d'instructions exécutables par un ordinateur ou un processeur pour mettre en œuvre le procédé selon au moins une des revendications 1 à 14.

17. Système d'interaction entre un premier objet numérique et au moins un deuxième objet numérique, les premier et deuxième objets numériques étant représentatifs respectivement d'un premier et deuxième dispositif, ledit système comprenant
- des moyens d'obtention, pour chacun desdits premier et deuxième objets numériques, d'au moins une information, dite propriété fonctionnelle, représentative d'au moins une fonction du dispositif représenté par l'objet numérique concerné ;
- des moyens de mémorisation d'une association entre au moins une fonction dudit premier dispositif, dite première fonction, et au moins une fonction dudit deuxième dispositif, dite deuxième fonction, ladite association étant définie à partir des propriétés fonctionnelles obtenues et ladite association étant déterminée par application d'au moins une règle d'association aux propriétés fonctionnelles respectives obtenues pour chacun desdits premier et deuxième objets numériques ;
- des moyens d'établissement d'une liaison de communication via au moins un réseau entre un premier équipement communicant apte à piloter le premier dispositif et un deuxième équipement communicant apte à piloter le deuxième dispositif,
- en cas de déclenchement d'une exécution par le premier dispositif d'une première fonction et lorsqu'une association est mémorisée entre ladite première fonction et une dite deuxième fonction d'un deuxième dispositif, des moyens d'envoi d'une notification du premier équipement communicant vers le deuxième équipement communicant au travers de ladite liaison de communication afin de déclencher l'exécution de ladite deuxième fonction par ledit deuxième dispositif.

## Patentansprüche

1. Verfahren zur Interaktion zwischen einem ersten digitalen Objekt und mindestens einem zweiten digitalen Objekt, wobei das erste und das zweite digitale Objekt jeweils repräsentativ für eine erste und eine zweite Vorrichtung sind,
wobei das Verfahren die folgenden Schritte aufweist:
- Erhalten für jedes des ersten und zweiten digitalen Objekts von mindestens einer Information, die als funktionale Eigenschaft bezeichnet wird und für mindestens eine Funktion der Vorrichtung repräsentativ ist, die durch das betreffende digitale Objekt dargestellt wird;
- Speichern einer Zuordnung zwischen mindestens einer Funktion der ersten Vorrichtung, die als erste Funktion bezeichnet wird, und mindestens einer Funktion der zweiten Vorrichtung, die als zweite Funktion bezeichnet wird, wobei die Zuordnung ausgehend von den erhaltenen funktionalen Eigenschaften definiert wird und die Zuordnung über Anwendung von mindestens einer Zuordnungsregel auf die jeweiligen funktionalen Eigenschaften bestimmt wird, die für jedes des ersten und zweiten digitalen Objekts erhalten wird;
- Einrichten einer Kommunikationsverbindung über mindestens ein Netzwerk zwischen einer ersten Kommunikationseinrichtung, die geeignet ist, die erste Vorrichtung zu steuern, und einer zweiten Kommunikationseinrichtung, die geeignet ist, die zweite Vorrichtung zu steuern,
- im Falle des Auslösens einer Ausführung einer ersten Funktion durch die erste Vorrichtung und wenn eine Zuordnung zwischen der ersten Funktion und einer zweiten Funktion einer zweiten Vorrichtung gespeichert ist, Senden einer Benachrichtigung der ersten Kommunikationseinrichtung an die zweite Kommunikationseinrichtung über die Kommunikationsverbindung, um die Ausführung der zweiten Funktion durch die zweite Vorrichtung auszulösen.

2. Verfahren nach Anspruch 1, das die folgenden Schritte aufweist:
- Darstellen der erhaltenen funktionalen Eigenschaften für einen Benutzer der ersten oder der zweiten Vorrichtung,
- Bereitstellen von Mitteln zum Auswählen von funktionalen Eigenschaften, die für zuzuordnende Funktionen repräsentativ sind, für den Benutzer, und
- Erhalten von Zuordnungsdaten, die für eine zu speichernde Zuordnung zwischen Funktionen repräsentativ sind, die durch vom Benutzer gewählte funktionale Eigenschaften dargestellt werden.

3. Verfahren nach Anspruch 1, das die folgenden Schritte aufweist:
- Erkennen des Vorhandenseins der zweiten Kommunikationseinrichtung in einer Erkennungszone um die erste Kommunikationseinrichtung herum;
- Erhalten mindestens einer funktionalen Eigenschaft der zweiten Vorrichtung von der ersten Kommunikationseinrichtung;
- Senden einer Anfrage für eine Zuordnungsspeicherung durch die erste Kommunikationseinrichtung an die zweite Kommunikationseinrichtung, um den Schritt des Speicherns auszulösen,
wobei das Senden der Benachrichtigung durchgeführt wird, wenn die zweite Kommunikationseinrichtung die Erkennungszone verlassen hat.

4. Verfahren nach Anspruch 1, das die folgenden Schritte aufweist:
- Erhalten für ein drittes digitales Objekt, das für eine dritte Vorrichtung repräsentativ ist, von mindestens einer Information, die als funktionale Eigenschaft bezeichnet wird und für mindestens eine Funktion der dritten Vorrichtung repräsentativ ist;
- Speichern einer Zuordnung zwischen der ersten Funktion der ersten Vorrichtung und mindestens einer Funktion der dritten Vorrichtung, die als dritte Funktion bezeichnet wird;
- im Falle des Erkennens einer gespeicherten Zuordnung einerseits zwischen der dritten Funktion und der ersten Funktion und andererseits zwischen der zweiten Funktion und der ersten Funktion, Speichern einer Zuordnung zwischen der dritten Funktion der dritten Vorrichtung und der zweiten Funktion der zweiten Vorrichtung;
- im Falle des Auslösens einer Ausführung der ersten Funktion durch die erste Vorrichtung und wenn eine Zuordnung zwischen der ersten Funktion und der dritten Funktion gespeichert ist, Auslösen einer Ausführung der dritten Funktion durch die dritte Vorrichtung,
- im Falle des Auslösens einer Ausführung der zweiten Funktion durch die zweite Vorrichtung und wenn eine Zuordnung zwischen der zweiten Funktion und der dritten Funktion gespeichert ist, Auslösen einer Ausführung der dritten Funktion durch die dritte Vorrichtung.

5. Verfahren nach Anspruch 1, wobei das erste digitale Objekt repräsentativ für mindestens ein reales oder virtuelles Objekt ist, das innerhalb eines geografischen Bereichs lokalisiert ist, der als lokaler geografischer Bereich bezeichnet wird, eine geografische Position von mindestens einem realen oder virtuellen Objekt, dargestellt durch ein digitales Objekt und lokalisiert in einem geografischen Bereich, der von dem lokalen geografischen Bereich entfernt ist, und die in einer sogenannten entfernten Datenbank gespeichert ist, die auf digitale Objekte verweist, eine entfernte Einrichtung, die auf die entfernte Datenbank zugreift und geeignet ist, um in Abhängigkeit von geografischen Positionen, die für Objekte im entfernten geografischen Bereich gespeichert sind, und von Verweisinformationen auf die geografische Position und die Ausrichtung einer im lokalen geografischen Bereich verwendeten Verweisvorrichtung zu bestimmen, ob durch die gegebene Verweisvorrichtung auf die Position eines digitalen Objekts verwiesen wird, wobei das Verfahren die folgenden Schritte aufweist:
- Einrichten eines Kommunikationskanals zwischen einer Kommunikationseinrichtung, die als entfernt bezeichnet wird und auf die entfernte Datenbank zugreift, und einer Kommunikationseinrichtung, die als lokal bezeichnet wird und im lokalen geografischen Bereich lokalisiert ist und geeignet ist, die Verweisinformationen der lokalen Verweisvorrichtung zu erhalten;
- Empfangen der Verweisinformationen durch die entfernte Kommunikationseinrichtung über den Kommunikationskanal;
- Identifizieren eines digitalen Objekts des entfernten geografischen Bereichs, auf dessen geografische Position durch die lokale Verweisvorrichtung virtuell verwiesen wird, durch die entfernte Kommunikationseinrichtung in Abhängigkeit einerseits von den empfangenen Verweisinformationen und andererseits von einer virtuellen Ausgangsposition und einer virtuellen Ausgangsausrichtung, die der lokalen Verweisvorrichtung in dem entfernten geografischen Bereich zugewiesen sind,
- wobei der Schritt des Speicherns einer Zuordnung für das identifizierte digitale Objekt ausgelöst wird.

6. Verfahren nach Anspruch 1, das die folgenden Schritte aufweist:
- Aktualisieren einer Datenbank von Zuordnungen, die auf die digitalen Objekte verweist, die mindestens durch ihre erhaltenen funktionalen Eigenschaften definiert werden;
- Übertragen von mindestens einer Information, die für die Zuordnung der ersten und der zweiten Funktion repräsentativ ist, an die erste und die zweite Kommunikationseinrichtung.

7. Verfahren nach Anspruch 2, wobei das Verfahren Folgendes aufweist:
- gemäß einer Zuordnungsregel wird der Schritt des Speicherns einer Zuordnung zwischen der ersten Funktion und der zweiten Funktion durchgeführt, wenn ein Ausgabedatenelement der ersten Funktion als Eingabedatenelement der zweiten Funktion verwendbar ist,
- wobei die Ausführung der zweiten Funktion der zweiten Vorrichtung ausgelöst wird, um mindestens ein Datenelement zu verarbeiten, das während der Ausführung der ersten Funktion verarbeitet wird.

8. Verfahren nach Anspruch 1, wobei das Verfahren aufweist, dass gemäß einer Zuordnungsregel der Schritt des Zuordnens auch mindestens eine Information berücksichtigt, die repräsentativ für einen Verwendungszusammenhang der Vorrichtungen ist.

9. Verfahren nach Anspruch 1, wobei das Verfahren **dadurch gekennzeichnet ist, dass** gemäß einer Zuordnungsregel,
wenn eine erste Funktion der ersten Vorrichtung, die als Zustandsänderung bezeichnet wird, eine Zustandsänderung der ersten Vorrichtung in einen Zustand bewirkt, der identisch zu dem ist, in dem sich die zweite Vorrichtung nach einer Ausführung einer zweiten Funktion der zweiten Vorrichtung, die als Zustandsänderung bezeichnet wird, befindet,
der Schritt des Speicherns einer Zuordnung zwischen der ersten Zustandsänderungsfunktion der ersten Vorrichtung und der zweiten Zustandsänderungsfunktion der zweiten Vorrichtung in der Art durchgeführt wird, dass im Falle des Auslösens einer Ausführung der ersten Zustandsänderungsfunktion durch die erste Vorrichtung die zweite Zustandsänderungsfunktion ausgelöst wird und sich die zweite Vorrichtung in demselben Zustand befindet wie die erste Vorrichtung.

10. Verfahren nach Anspruch 1, wobei das Verfahren **dadurch gekennzeichnet ist, dass** das erste digitale Objekt repräsentativ für mindestens ein erstes reales oder virtuelles Objekt ist, das innerhalb eines ersten geografischen Bereichs lokalisiert ist, und das zweite digitale Objekt repräsentativ für mindestens ein reales oder virtuelles zweites Objekt ist, das innerhalb eines zweiten geografischen Bereichs lokalisiert ist, der von dem ersten geografischen Bereich entfernt ist,
und dass das erste und das zweite digitale Objekt in einer lokalen Datenbank für digitale Objekte bzw. in einer entfernten Datenbank für digitale Objekte referenziert sind und dass der Schritt des Erhaltens durch Abfragen der lokalen und der entfernten Datenbank für digitale Objekte durchgeführt wird.

11. Verfahren nach Anspruch 1, wobei das Verfahren **dadurch gekennzeichnet ist, dass** es von mindestens einem Modul zum Verwalten von Zuordnungen durchgeführt wird, das Zugriff auf mindestens eine Datenbank für digitale Objekte hat.

12. Verfahren nach Anspruch 11, wobei das Verfahren **dadurch gekennzeichnet ist, dass** das Modul zum Verwalten von Zuordnungen einerseits mit einer lokalen Kommunikationseinrichtung kommuniziert, die Zugriff auf die lokale Datenbank für digitale Objekte hat, und andererseits mit einer entfernten Kommunikationseinrichtung, die Zugriff auf die entfernte Datenbank für digitale Objekte hat.

13. Verfahren nach Anspruch 11, wobei das Verfahren **dadurch gekennzeichnet ist, dass** das Modul zum Verwalten von Zuordnungen einerseits mit einer lokalen Kommunikationseinrichtung kommuniziert, die Zugriff auf die lokale Datenbank für digitale Objekte hat, oder mit einer entfernten Kommunikationseinrichtung, die Zugriff auf die entfernte Datenbank für digitale Objekte hat, und andererseits mit einer der Vorrichtungen.

14. Verfahren nach Anspruch 11, wobei das Verfahren **dadurch gekennzeichnet ist, dass** die erste und die zweite Vorrichtung in eine erste bzw. eine zweite Kommunikationseinrichtung integriert sind, die geeignet sind, miteinander zu kommunizieren, wobei das Verfahren von der ersten oder der zweiten Kommunikationseinrichtung durchgeführt wird.

15. Computerprogrammprodukt, das Programmcodeanweisungen zum Ausführen des Verfahrens nach mindestens einem der Ansprüche 1 bis 14 aufweist, wenn das Programm auf einem Computer ausgeführt wird.

16. Computerlesbares und nicht flüchtiges Speichermedium, das ein Computerprogramm speichert, das ein Satz Anweisungen aufweist, die von einem Computer oder einem Prozessor ausführbar sind, um das Verfahren nach mindestens einem der Ansprüche 1 bis 14 durchzuführen.

17. System zur Interaktion zwischen einem ersten digitalen Objekt und mindestens einem zweiten digitalen Objekt, wobei das erste und das zweite digitale Objekt jeweils repräsentativ für eine erste und eine zweite Vorrichtung sind, wobei das System Folgendes aufweist:
- Mittel zum Erhalten für jedes des ersten und zweiten digitalen Objekts von mindestens einer Information, die als funktionale Eigenschaft bezeichnet wird und für mindestens eine Funktion der Vorrichtung repräsentativ ist, die durch das betreffende digitale Objekt dargestellt wird;
- Mittel zum Speichern einer Zuordnung zwischen mindestens einer Funktion der ersten Vorrichtung, die als erste Funktion bezeichnet wird, und mindestens einer Funktion der zweiten Vorrichtung, die als zweite Funktion bezeichnet wird, wobei die Zuordnung ausgehend von den erhaltenen funktionalen Eigenschaften definiert wird und die Zuordnung über Anwendung von mindestens einer Zuordnungsregel auf die jeweiligen funktionalen Eigenschaften bestimmt wird, die für jedes des ersten und zweiten digitalen Objekts erhalten wird;
- Mittel zum Einrichten einer Kommunikationsverbindung über mindestens ein Netzwerk zwischen einer ersten Kommunikationseinrichtung, die geeignet ist, die erste Vorrichtung zu steuern, und einer zweiten Kommunikationseinrichtung, die geeignet ist, die zweite Vorrichtung zu steuern,
- im Falle des Auslösens einer Ausführung einer ersten Funktion durch die erste Vorrichtung und wenn eine Zuordnung zwischen der ersten Funktion und einer zweiten Funktion einer zweiten Vorrichtung gespeichert ist, Mittel zum Senden einer Benachrichtigung der ersten Kommunikationseinrichtung an die zweite Kommunikationseinrichtung über die Kommunikationsverbindung, um die Ausführung der zweiten Funktion durch die zweite Vorrichtung auszulösen.

## Claims

1. Method for interaction between a first digital object and at least a second digital object, said first and second digital objects being representative of a first and second device, respectively, said method comprising the following steps:
- obtaining, for each of said first and second digital objects, at least one item of information, called functional property, representative of at least one function of the device represented by the digital object in question;
- storing an association between at least one function of said first device, called first function, and at least one function of said second device, called second function, said association being defined on the basis of the functional properties obtained and said association being determined by applying at least one association rule to the respective functional properties obtained for each of said first and second digital objects;
- establishing a communication link via at least one network between a first communicating equipment able to control the first device and a second communicating equipment able to control the second device;
- in the event of an execution of a first function by the first device being triggered and when an association is stored between said first function and a said second function of a second device, sending a notification from the first communicating equipment to the second communicating equipment through said communication link in order to trigger the execution of said second function by said second device.

2. Method according to Claim 1, comprising the following steps:
- presenting the functional properties obtained to a user of the first or of the second device;
- making means for selecting functional properties representative of functions to be associated available to the user; and
- obtaining association data representative of an association to be stored between functions represented by functional properties selected by the user.

3. Method according to Claim 1, comprising the following steps:
- detecting the presence of the second communicating equipment in a detection zone around the first communicating equipment;
- the first communicating equipment obtaining at least one functional property of the second device;
- the first communicating equipment sending an association storage request to the second communicating equipment in order to trigger said storage step,
said notification being sent when the second communicating equipment has left said detection zone.

4. Method according to Claim 1, comprising the following steps:
- obtaining, for a third digital object representative of a third device, at least one item of information, called functional property, representative of at least one function of the third device;
- storing an association between said first function of the first device, and at least one function of said third device, called third function;
- in the event of detection of a stored association between said third function and said first function and between said second function and said first function, storing an association between said third function of the third device and said second function of the second device;
- in the event of an execution of said first function by said first device being triggered and when an association is stored between said first function and said third function, triggering an execution of said third function by the third device;
- in the event of an execution of said second function by said second device being triggered and when an association is stored between said second function and said third function, triggering an execution of said third function by the third device.

5. Method according to Claim 1, wherein the first digital object is representative of at least one real or virtual object located within a geographical perimeter, called local geographical perimeter, a geographical position of at least one real or virtual object, represented by a digital object and located within a geographical perimeter remote from the local geographical perimeter, is stored in a database, called remote database, referencing digital objects, a remote equipment accessing the remote database being suitable for determining, according to geographical positions stored for objects within the remote geographical perimeter and pointing information on the geographical position and the orientation of a pointing device used within the local geographical perimeter, if the position of one of the digital objects is pointed out by the given pointing device, the method comprising the following steps:
- establishing a communication channel between a communicating equipment, called remote equipment, accessing the remote database and a communicating equipment, called local equipment, located within the local geographic perimeter, capable of obtaining the pointing information from the local pointing device;
- the remote communicating equipment receiving the pointing information via the communication channel;
- the remote communicating equipment identifying, according to the pointing information received and according to a virtual starting position and a virtual starting orientation assigned to the local pointing device within the remote geographical perimeter, a digital object of the remote geographical perimeter the geographical position of which is pointed out virtually by the local pointing device;
- the step of storing an association being triggered for the identified digital object.

6. Method according to Claim 1, comprising the following steps:
- updating a database of associations referencing the digital objects defined at least by their obtained functional properties;
- transmitting at least one item of information representative of the association of the first and second functions to the first and second communicating equipments.

7. Method according to Claim 2, the method comprising:
- according to a said association rule, the step of storing an association between said first function and said second function is implemented when an output data from said first function can be used as input data for said second function;
- the execution of said second function of said second device being triggered in order to process at least one item of data processed during the execution of said first function.

8. Method according to Claim 1, the method comprising, according to a said association rule, the association step also taking into account at least one item of information representative of a context of use of the devices.

9. Method according to Claim 1, the method being such that, according to a said association rule, when a first function, called change-of-state function, of the first device causes a change of state of the first device to a state identical to that in which the second device is situated following an execution of a second function, called change-of-state function, of the second device,
the step of storing an association is implemented between the first change-of-state function of the first device and the second change-of-state function of the second device such that, in the event of an execution of the first change-of-state function by said first device being triggered, the second change-of-state function is triggered and the second device is situated in the same state as the first device.

10. Method according to Claim 1, the method being such that the first digital object is representative of at least one first real or virtual object located within a first geographical perimeter and the second digital object is representative of at least one second real or virtual object located within a second geographical perimeter, remote from the first geographical perimeter,
and such that the first and second digital objects are referenced in a local digital object database and a remote digital object database, respectively, and in that the obtaining step is implemented by checking said local and remote digital object databases.

11. Method according to Claim 1, the method being such that it is implemented by at least one association management module having access to at least one said digital object database.

12. Method according to Claim 11, the method being such that said association management module communicates with a local communicating equipment having access to the local digital object database and with a remote communicating equipment having access to the remote digital object database.

13. Method according to Claim 11, the method being such that said association management module communicates with a local communicating equipment having access to the local digital object database or a remote communicating equipment having access to the remote digital object database and with one of the devices.

14. Method according to Claim 11, the method being such that, the first and second devices being integrated into first and second communicating equipments, respectively, which are able to communicate with one another, the method is implemented by the first or second communicating equipment.

15. Computer program product comprising program code instructions for implementing the method according to at least one of Claims 1 to 14, when said program is executed on a computer.

16. Computer-readable and non-transient storage medium storing a computer program comprising a set of instructions executable by a computer or a processor for implementing the method according to at least one of Claims 1 to 14.

17. System for interaction between a first digital object and at least a second digital object, the first and second digital objects being representative of a first and second device, respectively, said system comprising:
- means for obtaining, for each of said first and second digital objects, at least one item of information, called functional property, representative of at least one function of the device represented by the digital object in question;
- means for storing an association between at least one function of said first device, called first function, and at least one function of said second device, called second function, said association being defined on the basis of the functional properties obtained and said association being determined by applying at least one association rule to the respective functional properties obtained for each of said first and second digital objects;
- means for establishing a communication link via at least one network between a first communicating equipment able to control the first device and a second communicating equipment able to control the second device;
- in the event of an execution of a first function by the first device being triggered and when an association is stored between said first function and a said second function of a second device, means for sending a notification from the first communicating equipment to the second communicating equipment through said communication link in order to trigger the execution of said second function by said second device.
